# EUROPÄISCHE PATENTSCHRIFT

(11) **EP 2 616 211 B1**
(45) Veröffentlichungstag und Bekanntmachung des Hinweises auf die Patenterteilung: **12.11.2014**
(21) Anmeldenummer: 11801576.7
(22) Anmeldetag: 14.09.2011
(51) Int. Cl.: B23Q 1/00, B23Q 3/08, B25B 5/06

(54) **PNEUMATISCHES KOPPELMODUL, INSBESONDERE FÜR EIN NULLPUNKTSPANNSYSTEM FÜR EINE WERKZEUGMASCHINE, UND MODULARES SPANNSYSTEM**
PNEUMATIC COUPLING MODULE, IN PARTICULAR FOR A ZERO-POINT CLAMPING SYSTEM FOR A MACHINE TOOL, AND MODULAR CLAMPING SYSTEM
MODULE D'ACCOUPLEMENT PNEUMATIQUE, EN PARTICULIER POUR UN SYSTÈME DE SERRAGE À POINT ZÉRO POUR UNE MACHINE-OUTIL, ET SYSTÈME DE SERRAGE MODULAIRE

(30) Priorität: 15.09.2010 DE 102010037545
(43) Veröffentlichungstag der Anmeldung: 24.07.2013
(73) Patentinhaber: ZeroClamp GmbH, 82057 Icking (DE)
(72) Erfinder: HOFMANN, Klaus, 85567 Bruck (DE)
(74) Vertreter: Eder, Thomas
(86) Internationale Anmeldenummer: PCT/DE2011/075219
(87) Internationale Veröffentlichungsnummer: WO 2012/062301

(56) Entgegenhaltungen:
- WO-A1-2007/009439
- WO-A1-2010/063268
- DE-C1- 19 917 005

## Beschreibung

Die vorliegende Erfindung betrifft ein pneumatisches Koppelmodul, insbesondere für ein Nullpunktspannsystem, mit den Merkmalen des Oberbegriffs des Patentanspruchs 1 sowie ein modulartiges Spannsystem, insbesondere für eine Werkzeugmaschine, mit derartigen Koppelmodulen nach Anspruch 12.

In Werkzeugmaschinen der nach dem Stand der Technik bekannten Art werden Werkstücke bearbeitet, die dazu in unterschiedlicher Weise innerhalb des Bearbeitungsbereichs der Werkzeugmaschine befestigt werden können. Bekannt sind dazu insbesondere solche Vorrichtungen, bei denen das Werkstück über Spannzangen gegen ein Maschinenbett verschraubt wird und durch entsprechendes Lösen der Verschraubung wieder freigegeben wird. Darüber hinaus sind Spannvorrichtungen bekannt, die an den Arbeitstisch der Maschine geschraubt werden und spezifisch für ein bestimmtes Werkstück ausgebildet bzw. angeordnet sind. Beim Wechsel des Werkstücks bzw. des Werkstücktyps muss die Spannvorrichtung jeweils neu ab- und aufgebaut und der Nullpunkt bzw. Referenzpunk neu ermittelt werden.

Weiterhin ist es unter bestimmten Umständen erforderlich bzw. wünschenswert, mehrere Werkstücke gleichzeitig im Bearbeitungsbereich einer Werkzeugmaschine anzuordnen und zu fixieren bzw. von dort zu entnehmen. Dazu können die Werkstücke gemeinsam auf einem Träger, beispielsweise einer Palette fixiert angeordnet werden, um anschließend den Träger als Ganzes im Bearbeitungsbereich der Werkzeugmaschinen zu fixieren. Nach erfolgter Bearbeitung wird der Träger als Ganzes wieder aus der Fixierung gelöst und entnommen.

Allgemein bekannt sind solche Spannvorrichtungen, bei denen ein Fixierelement, welches mittelbar oder unmittelbar als Träger eines zu bearbeitenden Werkstücks verwendet wird, rastbar in eine Aufnahme eingesetzt wird. Das Verrasten bzw. Lösen kommt dabei der Fixierung bzw. Freigabe des Fixierelements gleich. Diese bekannten Spannvorrichtungen sind jedoch im Aufbau kompliziert und in der Bedienung umständlich.

Es wurden daher sogenannte Nullpunktspannsysteme für das Fixieren von Werkstücken im Bearbeitungsbereich einer Werkzeugmaschine entwickelt, die es ermöglichen, die Werkstücke selbst oder Träger für Werkstücke, beispielsweise in Form von Paletten, mit hoher und reproduzierbarer Genauigkeit im Bearbeitungsbereich einer Werkzeugmaschine zu fixieren. Eine derartige Vorrichtung ist beispielsweise aus der WO 2007/009439 A1 bekannt. Bei dieser Vorrichtung wird ein zapfenförmiges Eingriffselement, welches am Werkstück selbst oder an einem Werkstückträger vorgesehen sein kann, mittels einer pneumatisch betätigbaren Spanneinheit hochgenau arretiert. In einer Grundplatte, die fest in der Werkzeugmaschine angeordnet wird, können, vorzugsweise mehrere derartige Spanneinheiten in einem vorgegebenen Raster angeordnet sein, so dass ein Werkstück oder Werkstückträger mit einem oder mehreren Eingriffselementen einfach, schnell und mit extrem hoher Reproduzierbarkeit hinsichtlich der Position relativ zur Werkstückmaschine in den Bearbeitungsbereich der Werkzeugmaschine eingesetzt werden kann.

Zur Fixierung unterschiedlicher Werkstücke müssen diese jedoch jeweils mit wenigstens einem Eingriffselement oder mehreren Eingriffselementen versehen werden, welche dem Raster entsprechen, das durch die im Bearbeitungsbereich der Werkzeugmaschine vorgesehenen Spanneinheiten vorgegeben ist. Gleiches gilt für das Verwenden von Trägern für ein oder mehrere Werkstücke, mit daran angeordneten Eingriffselementen. Für das einfache Aufspannen von komplizierteren Werkstücken oder von Werkstücken in bestimmten Positionen ist es jedoch nach wie vor erforderlich, entweder direkt im Bearbeitungsbereich oder auf einem Werkstückträger zusätzliche Spannvorrichtungen zu verwenden, deren Montage im Bearbeitungsbereich oder konstruktiver Aufbau entweder infolge des relativ groben Rasters der Spanneinheiten unmöglich oder aufwändig ist. Auch die Abhilfe, das Werkstück auf einem Träger zu befestigen, erfordert entsprechenden Aufwand für die Montage entsprechender Fixier- oder Spanneinheiten auf dem Träger.

Es ist in diesem Zusammenhang auch bekannt, auf dem Träger seinerseits Spann- oder Klemmmodule zu verwenden, die ebenfalls pneumatisch betätigbar sind, d.h. von einer gelösten Position in eine Klemmposition überführbar sind und umgekehrt. Ein wesentlicher Teil des Aufwands der bei der Montage eines Spann- oder Klemmmoduls oder eines Koppelmoduls, wie einem Träger, der seinerseits pneumatisch bestätigbare Spanneinheiten aufweist, entsteht dadurch, dass für jede Einheit jeweils separate Druckleitungen für das Pneumatikmedium erforderlich sind.

Der Erfindung liegt daher ausgehend von diesem Stand der Technik die Aufgabe zugrunde, ein modulartiges Spannsystem, insbesondere für eine Werkzeugmaschine, und entsprechende Koppelmodule zu schaffen, wobei es möglich ist ein zu fixierendes Element, insbesondere ein Werkstück, einfach, schnell und mit hoher Reproduzierbarkeit der Befestigungsposition in einem vorgegebenen Bereich zu fixieren.

Die Erfindung löst diese Aufgabe mit den Merkmalen der Ansprüche 1 bzw. 12. Weitere Ausgestaltungen der Erfindung ergeben sich aus den Unteransprüchen.

Die Erfindung geht von der Erkenntnis aus, dass sich ein zu fixierendes Element, wie ein Werkstück, auf einfache Weise mittels pneumatisch zu arretierenden bzw. zu lösenden Modulen in einer vorgegebenen Position fixieren lässt, wenn ein modulartiges Spännsystem verwendet wird, das es ermöglicht, eine gewünschte Spanneinheit aus mehreren Koppelmodulen baukastenartig zusammenzusetzen, wobei das Pneumatikmedium nicht mehr über jeweils separate Druckluftleitungen, insbesondere Druckluftschläuche, zu den einzelnen Modulen geführt wird, sondern von jeweils dem vorhergehenden Modul an das damit gekoppelte Modul übergeben wird. Ein Koppelmodul ist dabei so ausgebildet, dass mindestens eine pneumatisch betätigbare Koppeleinrichtung vorgesehen ist, die in ihrem nichtdruckbeaufschlagten Zustand eine Arretierposition einnimmt, während bei Druckbeaufschlagung ein Übergang von der Arretierposition in die Freigabeposition erfolgt.

Das Zuführen des Pneumatikmediums zu der wenigstens einen Koppeleinrichtung erfolgt über einen Versorgungskanal, in dem ein Wegeventil angeordnet ist. Das Wegeventil ist manuell oder von einer Ansteuereinheit von einer Position "INTERN" in eine Position "EXTERN" überführbar. In der Position "INTERN" schaltet das Wegeventil den Versorgungskanal durch, so dass die wenigstens eine Koppeleinrichtung in die Freigabeposition gebracht wird. In der Position "EXTERN" trennt das Wegeventil den Versorgungskanal, so dass die wenigstens eine Koppeleinrichtung in die Arretierposition überführt wird. Gleichzeitig verbindet das Wegeventil in dieser Position den ersten Teil des Versorgungskanals (zwischen einer Zuführöffnung) und dem Wegeventil mit einem Versorgungs-Koppelkanal, der es ermöglicht, das Pneumatikmedium durch das betreffende Koppelmodul bis zu wenigstens einer Auslassöffnung durchzuschleifen, welche in einem Schnittstellenbereich liegt, an welchem das Koppelmodul mit einem weiteren pneumatischen Koppelmodul oder einem pneumatisch betätigbaren Arbeitsmoduls verbindbar ist. Im Zustand "INTERN" ist der Versorgungs-Koppelkanal dagegen vom ersten, das Druckmedium zuführenden Teil des Versorgungskanal getrennt, so dass in der Freigabeposition der Koppeleinrichtung kein Druckmedium über den Versorgungs-Koppelkanal entweichen kann.

Ein Arbeitsmodul befindet sich regelmäßig an einem Endpunkt einer Reihe von mehreren gekoppelten Koppelmodulen und kann anstelle einer pneumatischen Betätigung auch als rein manuell betätigbares Arbeitsmodul ausgebildet sein. In diesem Fall ist es nicht erforderlich, Arbeitsmodul mit einem Versorgungskanal für das Pneumatikmedium zu versehen.

Grundsätzlich kann ein Versorgungskanal vor und/oder nach dem Wegeventil in jeweils mehrere Teilarme verzweigen, wobei jeder nach dem Ventil bestehende Teilarm zu jeweils einer anderen Koppeleinrichtung führen kann. Die betreffenden Koppeleinrichtungen werden dann jeweils gemeinsam betätigt, d.h. in die Arretierposition bzw. Freigabeposition den. dann jeweils gemeinsam betätigt bzw. Freigabeposition überführt. Hierzu muss das Wegeventil in der Stellung "INTERN" stehen. Mehrere Teilarme vor dem Wegeventil können es ermöglichen, dem Versorgungskanal das Druckmedium über mehrere Wege (und Zuführöffnungen) zuzuführen. Dies kann selbstverständlich gleichzeitig, beispielsweise zur Erhöhung der Sicherheit, oder auch alternativ erfolgen, beispielsweise um unterschiedliche Ankoppelpositionen zu ermöglichen, wobei jeweils nur eine bzw. ausgewählte Zuführöffnungen mit Pneumatikmedium versorgt werden.

Das Betätigen der dem betreffenden Wegeventil zugeordneten Koppeleinrichtungen wird man in der Regel mittels eines weiteren Ventils vornehmen, welches den Versorgungskanal mit der Druckquelle verbindet bzw. von dieser trennt. In einem Koppelmodul können auch mehrere Versorgungskanäle vorgesehen sein, wobei jedem Versorgungskanal eine separate Zuführöffnung für das Druckmedium zugeordnet ist, oder es kann ein Sammelversorgungskanal verwendet werden, von dem die verschiedenen Versorgungskanäle abzweigen, in denen jeweils ein Wegeventil vorgesehen ist. Jedem dieser einzelnen Versörgungskanäle ist selbstverständlich jeweils ein separater Koppelkanal zugeordnet. Jeder Koppelkanal kann selbstverständlich auch in mehrere Teilarme verzweigen, so dass das über die Teilarme des Koppelkanals das durchgeschleifte Pneumatikmedium über mehrere Auslassöffnungen an das nachfolgende Koppel- oder Arbeitsmodul übergeben wird. Die mehreren Teilarme können dabei entweder dazu dienen, das Pneumatikmedium gleichzeitig über mehrere Wege an das folgende Modul zu übergeben oder es zu ermöglichen, das folgende Modul in unterschiedlichen Stellungen anzukoppeln, wobei die Zuführöffnung des oder der Versorgungskanäle in jeder der unterschiedlichen Stellungen mit mindestens jeweils einer Auslassöffnung des oder der Versorgungs-Koppelkanäle (bzw. der betreffenden Teilarme) fluchten.

In gleicher Weise kann in jedem Koppelmodul wenigstens ein Detektorkanal vorgesehen sein, welchem Pneumatikmedium zuführbar ist, wobei jeder Detektorkanal derart ausgebildet ist, dass sein Querschnitt bei Vorhandensein eines Eingriffselements in der Arretierposition der zugeordneten Koppeleinrichtung reduziert oder ganz verschlossen wird, so dass durch eine Druck-, Druckdifferenz- oder Durchflussmessung das Vorhandensein eines Eingriffselements oder der korrekte Sitz des Eingriffelements in der Arretierposition detektierbar ist. Dabei ist unter der Reduzierung des Öffnungsquerschnitts auch die Variante zu verstehen, bei der eine Auslassöffnung des Detektorkanals durch ein in der Arretierposition der wenigsten einem, dem Detektorkanal zugeordneten Koppeleinrichtung aufgenommenes Eingriffselement der nachfolgenden Koppel- oder Arbeitseinrichtung ganz verschlossen oder der Strömungswiderstand so erhöht wird, dass das Vorhandensein eines Eingriffselements detektierbar ist.

Dadurch kann auf einfache Weise ermittelt und ggf. auch ständig überprüft werden, ob ein Eingriffselement bzw. das betreffenden nachfolgende Modul korrekt in der Koppeleinrichtung arretiert ist.

Das dem Detektorkanal zugeführte Pneumatikmedium kann in gleicher Weise, wie vorstehend für den Versorgungskanal beschrieben, mittels eines darin vorgesehen Wegeventils entweder dem zum Detektorpunkt führenden Teil des Detektorkanals oder einem DetektorKoppelkanal zugeführt werden, der dazu dient, das Pneumatikmedium zu "Detektorzwecken" an das nachfolgende Modul durchzuschleifen. Auch dieses wenigstens eine Wegeventil weist demzufolge eine Stellung "INTERN" und eine Stellung "EXTERN" auf, wobei die Stellung "INTERN" die Detektorfunktion im betreffenden Modul ermöglicht und die Stellung "EXTERN" das Durchschleifen des Pneumatikmedium zum jeweils nächsten Modul.

Dabei ist es allerdings nicht zwingend erforderlich, dass das Pneumatikmedium im jeweils folgenden Modul ebenfalls zu Detektorzwecken verwendet wird. Es kann in gleicher Weise auch dem Versorgungskanal des folgenden Moduls zugeführt sein, während das im jeweiligen Modul über den Versorgungs-Koppelkanal durchgeschleifte Pneumatikmedium dem Detektorkanal des nachfolgenden Moduls zugeführt wird. Allerdings muss dann beim Ansteuern der Koppeleinrichtung des jeweils letzten Moduls in der Kette von gekoppelten Modulen bzw. beim Ausführen der Detektorfunktion bekannt sein, welcher Kanal des ersten Moduls in der Kette druckbeaufschlagt werden muss (zum Lösen der Koppeleinrichtung(en) des letzten Moduls) bzw. an welchem Kanal des ersten Moduls die Detektorfunktion ausgeführt werden muss (Messung des Drucks oder der Flussrate bzw. des Druckabfalls des Pneumatikmediums an einem festen Flusswiderstand).

Selbstverständlich kann auch der Detektorkanal vor und/oder nach dem Ventil jeweils mehrere Teilarme aufweisen. Dabei können alle Arme nach dem Ventil entweder zur selben Koppeleinrichtung führen, um dort die Detektorfunktion mit höherer Sicherheit zu realisieren, oder zu verschiedenen Koppeleinrichtungen, wobei die Überwachung bereits dann anspricht, wenn sich der Strömungswiderstand in einem der Arme reduziert, weil das betreffende Eingriffselement nicht mehr korrekt arretiert ist.

Das Vorsehen mehrere Arme des Detektorkanals vor dem betreffenden Wegeventil kann aus demselben Grund erfolgen, wie in Verbindung mit der Aufteilung des Versorgungskanals vor dem Wegeventil in mehrere Arme beschrieben.

Nach einer bevorzugten Ausführungsform der Erfindung weist die wenigstens eine Koppeleinrichtung mindestens eine separate Koppeleinheit auf, welche in einem Grundkörper des Koppelmoduls im Schnittstellenbereich aufgenommen ist, wobei das wenigstens eine Wegeventil im Grundkörper vorgesehen ist. Diese Variante ermöglicht die separate Fertigung der Koppeleinrichtungen als eigenständige Einheiten, die dann nur noch in den Grundkörper des Koppelmoduls eingesetzt werden müssen. Dies ermöglicht auch einen einfachen Austausch von defekten Koppeleinheiten.

Jede dieser separaten Koppeleinheiten kann auch wenigstens einen Kanal aufweisen, der einen Teil des betreffenden Versorgungs-Koppelkanals bildet, wobei die wenigstens eine Auslassöffnung des betreffenden Versorgungs-Koppelkanals vorzugsweise an der Koppeleinheit vorgesehen ist. Damit bildet die separate Koppeleinheit zumindest einen wesentlichen Teil des Schnittstellenbereichs. Der wenigstens eine Kanal, der in der Koppeleinheit den Teil des Versorgungs-Koppelkanals bildet, kann beispielsweise durch eine einfache Bohrung hergestellt werden.

Analog hierzu kann jede Koppeleinheit auch wenigstens einen Kanal aufweisen, der einen Teil des betreffenden Detektor-Koppelkanals bildet, wobei die wenigstens eine Auslassöffnung des betreffenden Detektor-Koppelkanals vorzugsweise an der Koppeleinheit vorgesehen ist.

Nach einer Ausgestaltung der Erfindung können wenigstens zwei Koppeleinrichtungen vorgesehen sein, wobei die wenigstens zwei ersten Teile der Versorgungskanäle von einem einzigen Versorgungs-Sammelversorgungskanal abzweigen, dem Pneumatikmedium über eine Zuführöffnung zuführbar ist. Hierdurch kann die Druckbeaufschlagung der Versorgungskanäle (nach dem erforderlichen Stellen der Wegeventile in den Versorgungskanälen) zentral erfolgen.

Selbstverständlich können im Fall von wenigstens zwei Koppeleinrichtungen auch die wenigstens zwei ersten Teile der Detektorkanäle von einem einzigen Sammeldetektorkanal abzweigen, dem Pneumatikmedium über eine Zuführöffnung zuführbar ist. Damit ergibt sich die Möglichkeit, auch das Überwachungs-Pneumatikmedium an einer zentralen Stelle zuzuführen.

Ein Koppelmodul nach der Erfindung kann auch einen weiteren Schnittstellenbereich aufweisen, mit welchem das Koppelmodul seinerseits mit einem ersten Schnittstellenbereich eines weiteren Koppelmoduls koppelbar ist, wobei in dem weiteren Schnittstellenbereich wenigstens ein Eingriffselement zum Eingriff in die Koppeleinrichtung des weiteren Koppelmoduls vorgesehen ist und wobei in dem weiteren Schnittstellenbereich wenigstens eine Zuführöffnung des Versorgungskanals oder Sammelversorgungskanals und gegebenenfalls auch wenigstens eine Zuführöffnung des Detektorkanals oder Sammeldetektorkanals derart angeordnet ist, dass diese mit der wenigstens einen Auslassöffnung des VersorgungsKoppelkanals bzw. des Detektor-Koppelkanals des weiteren Koppelmoduls im Wesentlichen dicht verbindbar ist. Damit kann ein derartiges Koppelmodul mit seinem weiteren Schnittstellenbereich auf einem vorhergehenden Koppelmoduls arretiert werden und mit dem Schnittstellenbereich, in dem die wenigstens eine Koppeleinrichtung vorgesehen ist, mit einem nachfolgenden Koppel- oder Arbeitsmodul verbunden werden.

Ein Koppelmodul nach der Erfindung kann einen zweiteilig ausgebildeten Grundkörper aufweisen, wobei ein erster Teil des Grundkörpers die wenigstens eine Koppeleinrichtung aufweist und ein zweiter Teil des Grundkörpers das wenigstens eine Eingriffselement aufweist, und dass die beiden Teile des Grundkörpers in wenigstens einem Freiheitsgrad relativ zueinander beweglich geführt sind, vorzugsweise um eine einzige rotatorische Achse oder in einer einzigen translatorischen Richtung.

Dabei erweist es sich als vorteilhaft, das wenigstens eine Wegeventil im Versorgungskanal und ggf. das wenigstens eine Wegeventil im Detektorkanal im zweiten Teil des Grundkörpers vorzusehen, da die Ventile stationär bleiben und die Zugänglichkeit zu den Ventilen nicht durch die Relativbewegung der beiden Grundkörperteile zueinander beeinträchtigt werden kann.

Ein modulartiges Spannsystem nach der Erfindung, insbesondere für einer Werkzeugmaschine, besteht aus mehreren Typen unterschiedlich ausgebildeter Koppelmodul nach einem der vorhergehenden Ansprüche, wobei die Typen von Koppelmodulen hinsichtlich der Eingriffselemente und hinsichtlich der Zuführöffnungen für die Versorgungskanäle oder Sammelversorgungskanäle sowie gegebenenfalls die Zuführöffnungen für die Detektorkanäle oder Sammeldetektorkanäle und hinsichtlich der Auslassöffnungen der VersorgungsKoppelkanäle sowie gegebenenfalls die Auslassöffnungen der Detektor-Koppelkanäle derart ausgebildet sind, dass gleichartig und unterschiedlich ausgebildete Koppelmodul zumindest in vorbestimmten Kombinationen koppelbar sind. Hierdurch wird eine Vielzahl von unterschiedlichen Kombinationen von mehreren gleichartig oder verschiedenartigen Typen von Koppelmodulen ermöglicht, so dass praktisch jede Aufgabe, ein zu fixierendes Element, beispielsweise ein Werkstück, in einer bestimmten Position und Lage zu spannen, mit einer geringen Anzahl von unterschiedlichen (oder auch gleichartigen) Koppelelementen gelöst werden kann.

Die Erfindung stellt ein baukastenartiges System in Form unterschiedlicher Typen von pneumatischen Koppelmodulen und Arbeitsmodulen bereit, die in vielfältiger Wiese miteinander koppelbar und kombinierbar sind, ohne dass jedes Koppelmodul separat mit einer Druckleitung oder einem Druckschlauch für das Zuführen des Pneumatikmediums an die Pneumatik-Druckquelle angeschlossen werden müsste.

Nach dem Koppeln eines zweiten Koppelmoduls mit einem ersten Koppelmodul bzw. dem Koppeln eines weiteren nachfolgenden Koppelmoduls mit einem vorhergehenden Koppelmodul werden jeweils das eine oder die mehreren Wegeventile, welche den Koppeleinrichtungen zugeordnet sind, die jeweils ein Eingriffselement des zweiten bzw. nachfolgenden Koppelmoduls arretieren, aus der Stellung "INTERN" in die Stellung "EXTERN" geschaltet, so dass das Pneumatikmedium zu dem zweiten bzw. nachfolgenden Koppelmodul durchgeschleift wird. Gleiches gilt für das bzw. die Wegeventile für die optional vorhandene Detektion der korrekten Arretierstellung der Eingriffselemente des zweiten bzw. nachfolgenden Koppelmoduls in die jeweilige Koppeleinrichtung des ersten bzw. vorhergehenden Koppelmoduls.

Die Erfindung wird nachfolgend anhand in der Zeichnung dargestellter Ausführungsbeispiele näher erläutert. In der Zeichnung zeigen:
- Fig. 1: eine perspektivische Darstellung einer ersten Variante einer Koppeleinheit mit zwei Koppelmodulen nach einer ersten Ausführungsform, die zur Befestigung auf einer Schiene ausgebildet sind, welche Kanäle und Auslassöffnungen für das Zuführen des Pneumatikmediums aufweist;
- Fig. 2: eine perspektivische horizontale Schnittansicht durch den unteren Grundkörperteil in Fig. 4 zur Verdeutlichung der Kanäle und Wegeventile für das Pneumatikmedium;
- Fig. 3: eine Schnittdarstellung der Koppeleinheiten, der Koppelmodule der Koppeleinheit in Fig. 1;
- Fig. 4: eine vergrößerte perspektivische Darstellung eines Koppelmoduls gemäß Fig. 1;
- Fig. 5: eine perspektivische Ansicht des unteren Grundköperteils des Koppelmoduls in Fig. 3;
- Fig. 6: eine perspektivische Darstellung der Schiene in Fig. 1 und eine perspektivische Ansicht von unten eines Koppelmoduls gemäß Fig. 1;
- Fig. 7: eine perspektivische Ansicht einer zweiten Variante einer Koppeleinheit mit einem als Grundplatte ausgebildeten Koppelmodul, einem Koppelmodul mit rotatorisch bewegbarem Schnittstellenbereich, einem linearen Koppelmodul, auf dem eine Koppeleinheit nach Fig. 1 arretiert ist, und einem Haltemodul; und
- Fig. 8: eine perspektivische Explosionsdarstellung der Koppeleinheit in Fig. 7.

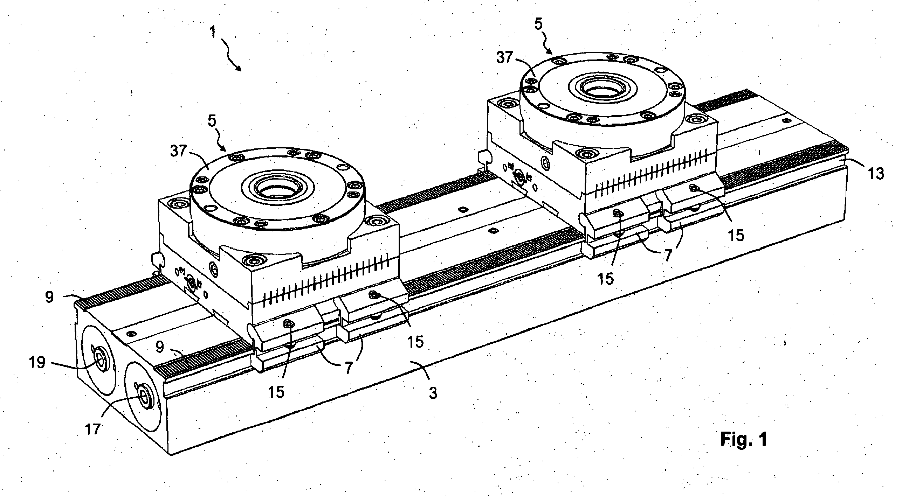

Die in Fig. 1 in einer perspektivischen Ansicht dargestellte erste Variante einer Koppeleinheit 1 umfasst eine Schiene 3 und zwei darauf befestigte Koppelmodule 5, welche auf beiden Lenkseiten jeweils zwei schwenkbare Klemmfüße 7 aufweisen, mit denen die Koppelmodule 5 auf der Schiene 3 befestigbar sind. Die Schiene 1 weist hierzu an den Außenseiten ihrer Oberseite jeweils eine Verzahnung 9 auf, welche mit einer an der Unterseite der Koppelmodule 5 angeordneten Verzahnung 11 zusammenwirkt, um das Koppelmodul 5 in der vorgesehenen Position nach dem Spannen der Klemmfüße 7 sicher zu fixieren.

An den seitlichen Außenflächen der Schiene 3 ist im oberen Bereich, unterhalb der Verzahnungen 9, jeweils eine Nut 13 vorgesehen, in welche die Klemmfüße 7 mit ihrem über die Unterseite der Koppelmodule 5 hinausragenden Fußteil eingreifen. Das Fixieren der Klemmfüße 7 erfolgt mittels Spannschrauben 15, welche in eine Gewindebohrung im oberen Teil jedes Klemmfußes 7 eingeschraubt sind und durch den oberen Teil jedes Klemmfußes 7 hindurch in eine Nut des Klemmfußes ragen. Das untere Ende jeder Spannschraube 15 beaufschlagt den unteren Fußteil, welcher über eine relativ dünne vertikale Wandung mit dem oberen Teil jedes Klemmfußes 7 verbunden ist. Die vertikale Wandung wirkt wie eine Festkörperfeder, so dass durch die Beaufschlagung des unteren Teils des Klemmfußes 7 durch das untere Ende der Spannschraube 15 der untere Teil wie ein Hebel um eine Achse schwenkbar ist, die parallel zur Längsachse der Schiene 3 verläuft. Das innenseitige, in die Nut 13 eingreifende Ende des unteren Teils des Klemmfußes 7 wird hierdurch bei einer Beaufschlagung durch das untere Ende der Spannschraube 15 nach oben verschwenkt und beaufschlagt die obere, horizontale Wandung der Nut 13. Hierdurch wird eine vertikal wirkende Kraft erzeugt, mit welcher das Koppelmodul 5 auf die Oberseite der Schiene 3 gezogen wird. In Verbindung mit den Verzahnungen 9, 11 wird hierdurch ein sicheres Spannen der Koppelmodule 5 auf der Schiene 3 gewährleistet. Die detaillierte Funktion der Klemmung der Koppelmodule 5 auf der Schiene 3 kann der WO 2010/063268 A1 entnommen werden.

Im Grundkörper der Schiene 3 sind in Längsrichtung verlaufende Kanäle 17, 19 vorgesehen, wobei an den Stirnseiten der Schiene 3 an jeder Zuführöffnung für die Kanäle 17, 19 jeweils eine externe Druckluftleitung (nicht dargestellt) druckdicht ankoppelbar ist.

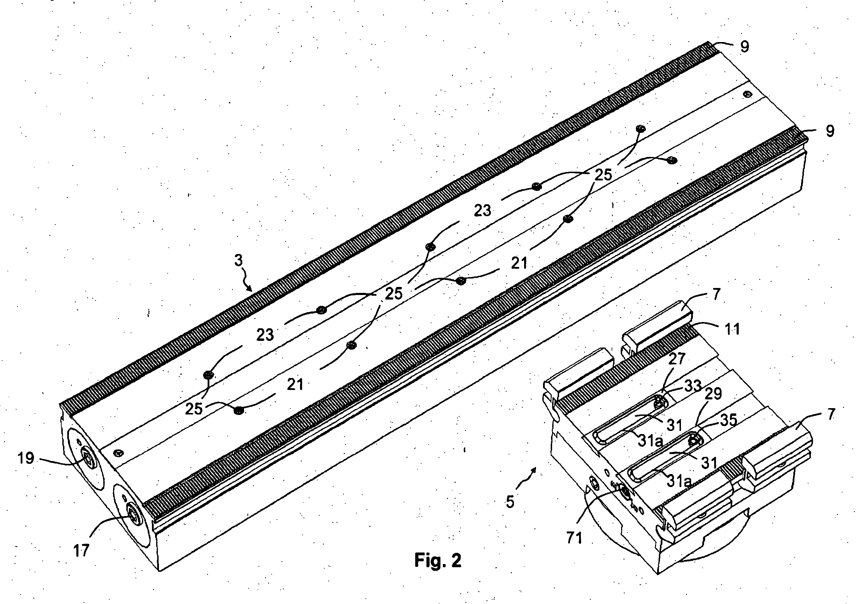

Wie aus den Fig. 1 und 2 ersichtlich, befinden sich auf den Oberseiten der Schiene 3 Auslassöffnungen 21, 23, welche jeweils mit den Längskanälen 17, 19 verbunden sind. Die Auslassöffnungen sind jeweils verschließbar ausgebildet. Wie in den Fig. 1 und 2 angedeutet, befinden sich in den Auslassöffnungen jeweils vertikal einschraubbäre Ventilschrauben 25, welche in einer ersten Stellung die betreffende Auslassöffnung 21, 23 verschließen und in einer zweiten, beispielsweise weiter eingeschraubten Stellung die Auslassöffnung freigeben. Der entsprechende Bereich des zugehörigen Kanals, welcher zur Auslassöffnung 21, 23 führt, kann hierzu beispielsweise konisch nach innen erweiternd ausgebildet sein. Hierdurch kann in einer oberen Stellung jeder Ventilschraube 25 eine Dichtfunktion erreicht werden, während beim Einschrauben der Ventilschraube 25 in den sich erweiternden Bereich des Kanals die betreffende Auslassöffnung 21, 23 freigegeben wird.

Damit kann jedem Kanal 17, 19 ein Pneumatikmedium unter Druck zugeführt werden, wobei durch eine entsprechende Einstellung der Ventilschrauben 25 auswählbar ist, über welche Auslassöffnung 21, 23 das Pneumatikmedium zu dem darüber befindlichen pneumatischen Koppelmodul 5 überströmen kann.

Wie aus Fig. 2 ersichtlich, sind an der Unterseite des Koppelmoduls 5 jeweils in Längsrichtung verschiebbare Dichtelemente 27, 29 vorgesehen, die im Wesentlichen druckdicht in einer Schwalbenschwanzführung an der Unterseite des Koppelmoduls 5 geführt sind. Jedes der Dichtelemente 27, 29 weist einen in Längsrichtung des Koppelmoduls 5 (bzw. der Schiene 3) ausgebildeten Durchbruch 31 auf, welcher in jeder möglichen Stellung des verschiebbaren Dichtelements 27, 29 mit jeweils einer zugeordneten Zuführöffnung 33, 35 verbunden ist. Durch die Verschiebbarkeit der Dichtelemente 27, 29 ist gewährleistet, dass das Koppelmodul 5 in einer beliebigen Position auf die Schiene 3 aufgesetzt werden kann, wobei jeweils eine Auslassöffnung 21, 23 aktiviert bzw. geöffnet wird, um das pneumatische Koppelmodul 5 mit Pneumatikmedium versorgen zu können. Obwohl die Auslassöffnungen 21, 23 in relativ großem, vorzugsweise äquidistantem Abstand in Längsrichtung der Schiene 3 vorgesehen sind, ist durch die Verschiebbarkeit der Dichtelemente 27, 29 und den in Längsrichtung relativ langen Durchbruch 31 sichergestellt, dass in jeder beliebigen Position des Koppelmoduls 5 das Dichtelement 27, 29 jeweils in eine solche Stellung verschoben werden kann, dass ein Übergang des Pneumatikmediums von der zugeordneten Auslassöffnung 21, 23 in den Durchbruch 31 der Dichtelemente 27, 29 und damit in die zugeordnete Zuführöffnung 33, 35 möglich ist.

Ohne die Verschiebbarkeit der Dichtelemente 27, 29 bestünde die Gefahr, dass in bestimmten Positionen des Koppelmoduls 5 auf der Schiene 3 die jeweilige Auslassöffnung 21, 23 gerade noch durch die Unterseite des Koppelmoduls 5 (zumindest teilweise) verschlossen würde, so dass kein ungehinderter Durchtritt des Pneumatikmediums geleistet wäre, selbst dann wenn man an der Unterseite des Koppelmoduls 5 eine dem Durchbruch 31 entsprechende Längsnut vorsehen würde.

Selbstverständlich kann an den Rändern des Durchbruchs 31 der Dichtelemente 27, 29 eine Dichtung 31 a vorgesehen sein, um einen druckdichten Übergang zwischen der Oberfläche der Schiene 3 und dem Koppelmoduls 5 zu gewährleisten.

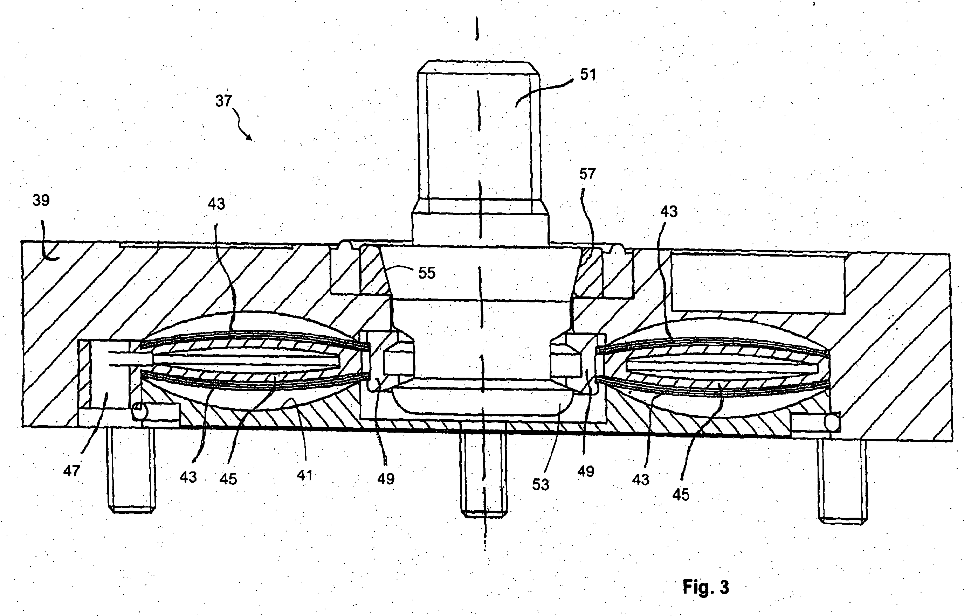

Das Koppelmodul 5 umfasst eine als separate Koppeleinheit 37 ausgebildete Koppeleinrichtung, die eine ringförmige bzw. hohlzylindrische Gestalt aufweist. Die Koppeleinheit 37 wird im Folgenden anhand der zentrischen Schnittdarstellung gemäß Fig. 3 näher erläutert:
Die Koppeleinheit 37 weist ein Gehäuse 39 auf, das im Inneren einen ringförmigen Hohlraum 41 besitzt. In diesem Hohlraum 41 sind jeweils zwei einander gegenüberliegende ringförmige Pakete von Federblechen 43 angeordnet, wobei zwischen den Paketen von Federblechen 43 ein ringförmiges Schlauchelement 45 angeordnet ist. Über eine Zuführöffnung 47 an der Unterseite des Gehäuses 39 der Koppeleinheit 37 kann dem Schlauchelement 45 Pneumatikmedium zugeführt werden. Im drucklosen Zustand beaufschlagen die in Richtung nach innen geschlitzt ausgebildeten Federbleche 43 in Folge ihrer Tendenz eine ebene Stellung einzunehmen mehrere Klemmelemente 49, die jeweils ein Segment eines insgesamt geteilt ausgebildeten ringförmigen Klemmelements bilden. Durch die Beaufschlagung über die Innenkanten der Federbleche 43 werden die Klemmelemente 49 im drucklosen Zustand somit nach innen gedrückt. Auf diese Weise ist es möglich, ein Eingriffselement 51 in der zentrischen Ausnehmung des pneumatischen Koppelelements 5 zu arretieren.

Wie in Fig. 3 dargestellt, kann ein Eingriffselement rotationssymmetrisch zapfenartig ausgebildet sein und an seiner Unterseite mit einem Bund 53 versehen sein, der an seiner Oberseite konisch einwärts verlaufend ausgebildet ist. Dieser Bund 53 kann von der unteren Stirnseite der Klemmelemente 49 beaufschlagt werden, die ebenfalls entsprechend konisch einwärts verlaufend ausgebildet ist. Durch die Einwärtsbewegung der Klemmelemente 49 wird somit durch das Zusammenwirken der jeweils konischen Flächen der Klemmelemente 49 und des Bunds 53 des Eingriffselements 51 das Eingriffselement 51 in die Aufnahmeöffnung des Koppelmoduls hineingezogen, bis entsprechende Anschlagflächen 55 des Eingriffselements 51 bzw. 57 der Koppeleinheit 37 derart zusammenwirken, dass die Einwärtsbewegung des Eingriffselements 51 gestoppt und das Eingriffselement 51 sicher in der Koppeleinheit 37 arretiert bzw. gespannt wird.

Das Lösen der Arretierung erfolgt durch eine Beaufschlagung des Schlauchelements 45 mit dem unter vorbestimmtem Druck stehenden Pneumatikmedium. Hierdurch wird der ringförmige Schlauch aufgeblasen, wodurch sich die an den Außenseiten des Schlauchelements 45 befindlichen Pakete von Federblechen 43, die jeweils an den radial äußeren und inneren Endbereichen in vertikaler Richtung fixiert sind, in eine gewölbte Stellung gebracht werden. Eine derartige Zwischenstellung ist in Fig. 3 dargestellt. In der Endstellung, die durch eine entsprechende Formgebung des ringförmigen Hohlraums 41 vorgegeben sein kann, sind die Federbleche 43 soweit gewölbt, dass die radial innenseitigen Enden soweit zurückgesogen sind, dass die Klemmelemente 49 radial nach außen bewegbar sind. Hierdurch kann das Eingriffselement 51 aus der Aufnahmeöffnung in der Koppeleinheit 37 entnommen werden. Die Bewegung der Klemmelemente 49 radial nach außen kann auch durch entsprechend angeordnete Federelemente unterstützt werden, die beispielsweise zwischen den einander gegenüberstehenden stirnseitigen segmentartigen Klemmelementen 49 angeordnet sind.

Damit ist bei einer derartigen Koppeleinheit 37 auf einfache Weise eine sichere Arretierung eines Klemmelements 51 gewährleistet. Eine detaillierte Beschreibung einer derartigen Koppeleinheit 37 kann beispielsweise auch der WO 2007/009439 A1 entnommen werden.

Die Koppeleinheit nach Fig. 1 gewährleistet somit die Positionierung der Koppelmodule 5 in beliebiger Stellung auf einer Schiene 3. Damit kann beispielsweise ein Werkstück oder ein weiteres Koppelmodul mit jeweils entsprechend vorgesehenen Eingriffselementen in die Aufnahmeöffnungen der Koppelmodule 5 eingesetzt und darin arretiert werden.

Für die Montage der Einheit 1 ist es lediglich erforderlich, die Koppelmodule 5 an vorbestimmte Positionen auf die Schiene 3 aufzusetzen und mittels der Spannschrauben 15 zu fixieren. Zuvor müssen selbstverständlich die passenden Auslassöffnungen 21, 23 in der Oberseite der Schiene 3 freigegeben werden. Wird derjenige Kanal 17, 19 welcher das Pneumatikmedium über die betreffende Zuführöffnung 33, 35 im Koppelmodul 5 der Zuführöffnung 47 der Koppeleinheit 37 zuführt, mit Druck beaufschlagt, so wird die Koppeleinheit 37 in die nicht arretierte bzw. Freigabeposition überführt, so dass ein Eingriffselement 51 einer weiteren beliebigen Einheit eingesetzt werden kann. Wird der Druck des Pneumatikmediums abgeschaltet, so wird die Koppeleinheit 37 in die Arretierposition überführt, in welcher das Eingriffselement 51 sicher gehalten ist.

Da die Schiene 3 in Folge der Verzahnung 9, die mit der komplementären Verzahnung 11 an der Unterseite des Koppelmoduls 5 zusammenwirkt, das Arretieren eines Koppelmoduls 5 nur in einer entsprechenden Teilung zulässt, welche durch die Verzahnungen 9, 11 vorgegeben ist, wird durch eine zweiteilige Ausbildung des Grundkörpers 59 des Koppelmoduls 5 und eine verschiebbare Führung eines oberen Teils 61 in einem unteren Teil 63 des Grundkörpers 59 gewährleistet, dass praktisch beliebige Positionen der Koppeleinheiten 37 in Längsrichtung der Schiene 3 einstellbar sind. Hierzu ist der obere Teil 61 des Grundkörpers 59 vorzugsweise stufenlos gegenüber dem unteren Teil 63 um zumindest einen solchen Betrag verschiebbar, der größer ist als zumindest der halbe Teilungsabstand, der durch die Verzahnungen 9, 11 vorgegeben ist. Selbstverständlich kann der Verschiebeweg für den oberen Teil 61 gegenüber dem unteren Teil 63 des Grundkörpers 59 auch größer vorgesehen sein.

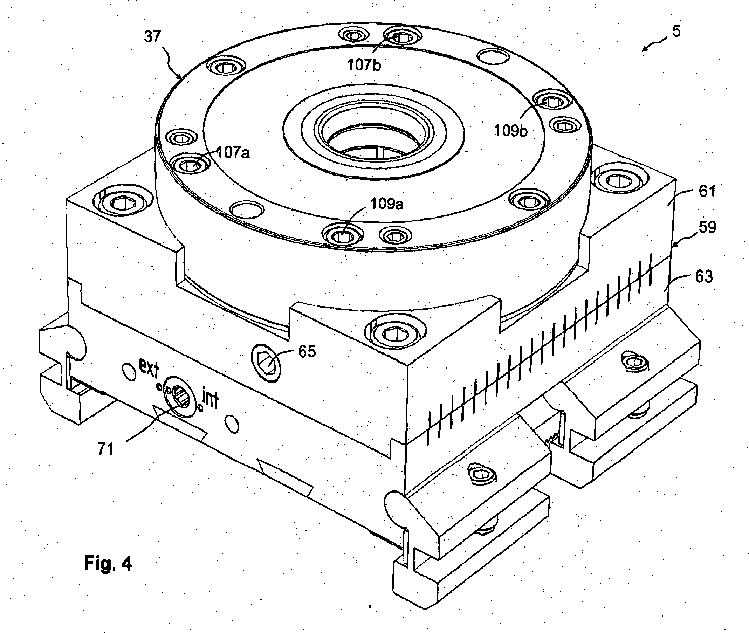

In Fig. 4 ist eine Stellschraube 65 an einer Stirnseite des Koppelmoduls 5 dargestellt, mit welcher die Verschiebebewegung mittels einer nicht näher dargestellten Mechanik erzeugt wird. Selbstverständlich kann auch diese Verschiebebewegung der Teile 61, 63 relativ zueinander entsprechend einer ebenfalls diskreten, jedoch sehr feinen Teilung vorgenommen werden. Beispielsweise kann hierzu die Stellschraube 65 rastend drehbar ausgebildet sein, so dass die Bewegungen entsprechend sehr feinen Schritten erfolgen können, wobei jeder Schritt durch einen entsprechenden Winkelbereich der Stellschraube zwischen zwei Rastpositionen vorgegeben ist.

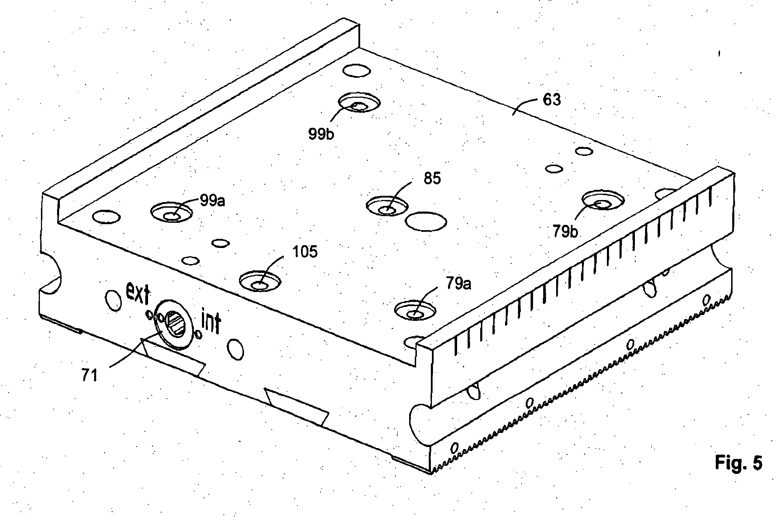

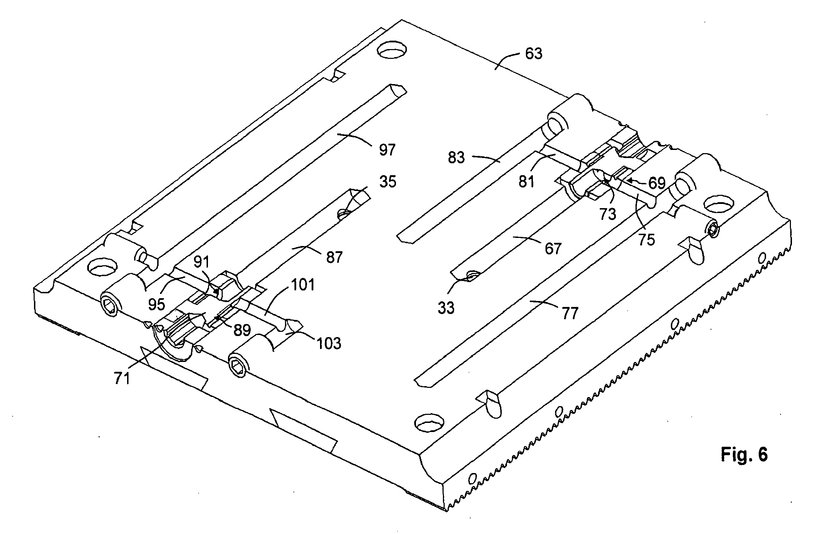

Im Folgenden wird anhand der Fig. 5 und 6 näher erläutert, wie das über die Zuführöffnungen 33, 35 (Fig. 2) zugeführte Pneumatikmedium innerhalb des unteren Teils 63 des Grundkörpers 59 des Koppelmoduls 5 geführt wird.

Das über die Zuführöffnung 33 zugeführte Pneumatikmedium gelangt über einen Kanal 67, der in Längsrichtung des unteren Grundkörperteils 63 verläuft zu einem ersten Port eines 3/2-Wegeventils 69. Das 3/2-Wegeventil 69 weist ein Stellelement 71 auf, welches in seinem in Richtung auf den Kanal 67 weisenden Teil hohlzylindrisch ausgebildet ist und in den Kanal 67 hineinragt. In dem hohlzylindrischen Teil weist das Stellelement 71 eine radial verlaufende Bohrung 73 auf, welche bei der in Fig. 6 gezeigten Position mit einem quer zum Kanal 67 verlaufenden Kanal 75 fluchtet. Hierdurch gelangt das Pneumatikmediums über den Kanal 67 und die radiale Bohrung 73 in den Kanal 75, dessen Zuführöffnung einen dritten Port des Wegeventils 69 bildet. Vom Kanal 75 strömt das Pneumatikmediums in einen weiteren, in Längsrichtung verlaufenden Kanal 77, der gegenüber dem Kanal 67 weiter in Richtung auf die Außenseite des unteren Grundkörperteils 63 vorgesehen ist. Ausgehend von diesem Kanal 77 sind in der Oberseite des unteren Grundkörperteils 63 zwei vertikal verlaufende Bohrungen vorgesehen, die den Kanal 77 mit Auslassöffnungen 79a, 79b in der Oberseite des Grundkörperteils 63 verbinden.

Der Kanal 67 bildet hier einen ersten Teil eines Detektorkanals, der über das Wegeventil mit einem durch die Kanäle 75 und 77 sowie die betreffende vertikale Bohrung gebildeten Teil eines Detektor-Koppelkanals verbindbar ist. Ein sich daran anschließender weiterer Teil des Detektor-Koppelkanals wird durch die betreffende axiale Bohrung in der Koppeleinheit 37 gebildet (siehe unten).

Wird das Stellelement 71 um 180° um seine Längsachse gedreht, so verbindet die Bohrung 73 den Kanal 67 mit einem weiteren quer hierzu verlaufenden Kanal 81, dessen Zuführöffnung einen zweiten Port des Wegeventils 69 darstellt. Der Kanal 81 mündet wiederum in einen in Längsrichtung verlaufenden weiteren Kanal 83, welcher in etwa mittig im unteren Grundkörperteil 63 endet. Eine vertikale Bohrung im unteren Grundkörperteil 63, die etwa in dessen Zentrum vorgesehen ist, verbindet eine Auslassöffnung 85 mit dem Kanal 83. Die Kanäle 81 und 83 sowie die zugehörige vertikale Bohrung bilden dabei einen Detektorkanal, der das Pneumatikmedium in der Stellung "EXTERN" des Wegeventils 69 der Koppeleinheit 37 zuführt.

Die Zuführöffnung 35 in der Unterseite des unteren Grundkörperteils 63 mündet in einen Kanal 87, der in Längsrichtung verläuft und in einem Bereich endet, in welchem ein weiteres 3/2-Wegeventil 89 vorgesehen ist, das ebenso ausgebildet ist, wie das 3/2-Wegesventil 69. Dieser Endbereich des Kanals 87 bildet einen ersten Port des Wegeventils 89. In der in Fig. 6 dargestellten Stellung verbindet eine radiale Bohrung 91 im hohlzylindrischen Teil eines Stellelements 93 des Ventils 89 den Kanal 87 mit einem quer hierzu verlaufenden Kanal 95, der wiederum in einen längs verlaufenden Kanal 97 mündet. Die Zuführöffnung des Kanals 95 bildet dabei einen dritten Port des Wegeventils 89.

Der Kanal 87 bildet damit einen ersten Teil eines Versorgungskanals, der über das Wegeventil 89 mit einem durch die Kanäle 95 und 97 gebildeten Teil eines Versorgungs-Koppelkanals verbindbar ist ein sich daran anschließender Teil des zweiten Teils des Detektorkanals wird durch die betreffende axiale Bohrung in der Koppeleinheit 37 gebildet (siehe unten).

Wie aus Fig. 5 ersichtlich, ist der Kanal 97 wiederum über zwei Bohrungen mit Auslassöffnungen 99a, 99b in der Oberseite des unteren Grundkörperteils 63 verbunden, die ebenfalls jeweils Teile des Detektor-Koppelkanals bilden.

Wird das Stellelement 71 ausgehend von der in Fig. 6 dargestellten Stellung "EXTERN" in die Stellung "INTERN" durch eine Drehung um 180° überführt, so verbindet die radiale Bohrung 91 den Kanal 87 mit einem weiteren quer verlaufenden Kanal 101, der seinerseits in einen längs verlaufenden, relativ kurzen Kanal 103 mündet. Die Zuführöffnung des Kanals 101 bildet dabei einen zweiten Port des Wegeventils 89. Der Kanal 103 ist wiederum über eine vertikale Bohrung mit einer Auslassöffnung 105 in der Oberseite des unteren Grundkörperteils 63 verbunden. Die Kanäle 101 und 103 sowie die vertikale Bohrung bilden dabei einen Versorgungskanal, der das Pneumatikmedium in der Stellung "INTERN" des Wegeventils 89 der Koppeleinheit 37 zuführt.

An dieser Stelle sei erwähnt, dass es sich bei der in Fig. 6 dargestellten Stellung des Stellelement 71 des 3/2-Wegeventils 69 ebenfalls um die Stellung "EXTERN" handelt.

Die Auslassöffnungen 79a, 79b, 99a, 99b, 85 und 105 in der Oberseite des unteren Grundkörperteils 63 münden in nicht dargestellter Weise in entsprechende vertikal und fluchtend (in der Nullposition der beiden Grundkörperteile 61, 63) verlaufende Bohrungen im oberen Grundkörperteil 61. Um die Verschiebung der beiden Grundkörperteile 61, 63 zueinander zu ermöglichen, ohne die Auslassöffnungen vollständig zu verschießen, sind sowohl die Auslassöffnungen in der Oberseite des unteren Grundkörperteils 63 als auch die entsprechend zugeordneten Zuführöffnungen an der Unterseite des oberen Grundkörperteils 61 (nicht dargestellt) radial erweiternd ausgebildet.

Damit liegen die Auslassöffnungen in der Oberseite des oberen Grundkörperteils 61 entsprechend der Konfiguration der Auslassöffnungen 79a, 79b, 99a, 99b, 85 rund 105 in der Oberseite des unteren Grundkörperteils 63.

Wird die Koppeleinheit in der korrekten azimutalen Position auf die Oberseite des oberen Grundkörperteils 63 gesetzt, so fluchtet die Zuführöffnung 47 an der Unterseite der Koppeleinheit 37 mit derjenigen vertikalen Bohrung im oberen Grundkörperteil 61, die mit der Auslassöffnung 105 im unteren Grundkörperteils 63 fluchtet. Damit wird der Koppeleinheit 37 Pneumatikmedium zugeführt, wenn das 3/2-Wegeventil 89 in die Position "INTERN" geschaltet ist. Bei einer Druckbeaufschlagung in dieser Position des Ventils 89 erfolgt somit das Überführen der Koppeleinheit 37 in die Freigabeposition.

Wird das 3/2-Wegeventil 89 in die Position "EXTERN" geschaltet, so wird das Pneumatikmedium nicht mehr zur Koppeleinheit 37, sondern in Richtung auf die Auslassöffnungen 99a, 99b in der Oberseite des unteren Grundkörperteils 61 geführt. Diese Auslassöffnungen fluchten wieder mit vertikalen Bohrungen im oberen Grundkörperteil 61, welche ihrerseits wiederum mit entsprechenden vertikalen Bohrungen im radial äußeren Umfangsbereich der Koppeleinheit 37 fluchten und in Auslassöffnungen 107a, 107b münden. Die Auslassöffnungen 107a, 107b ermöglichen daher das Durchschleifen von Pneumatikmedium durch die Koppeleinheit 5 für den Fall, dass sich das 3/2-Wegeventil 89 in der Stellung "EXTERN" befindet.

Im oberen Grundkörperteil 61 ist in nicht dargestellter Weise eine weitere vertikale Bohrung vorgesehen, die mit der Auslassöffnung 85 im unteren Grundkörperteil 63 fluchtet. Die Bohrung verläuft bis in die Oberseite des oberen Grundkörperteils 61 und endet daher zentrisch an einer Position, die der Stirnfläche eines in die Aufnahmeöffnung der Koppeleinheit 37 eingesetzten Eingriffselements 51 gegenüberliegt. Das Eingriffselement kann in seiner Geometrie so ausgebildet sein, dass es mit seiner Stirnfläche in der Arretierposition die Auslassöffnung des betreffenden Kanals im oberen Grundkörperteil 61 vollkommen verschließt oder die Strömung des Pneumatikmediums messbar beeinflusst. Auf diese Weise kann durch eine Messung der Flussrate oder des Drucks bzw. der Druckdifferenz (an einem festen Flusswiderstand) des Pneumatikmediums festgestellt werden, ob das Eingriffselement 51 korrekt in seiner Arretierposition gehalten ist. Entfernt sich die Stirnfläche des Eingriffselements 51 ausreichend weit von der Oberseite des oberen Grundkörperteils 61, so erhöht sich die Flussrate des "Mess"-Pneumatikmediums, so dass ein unerwünschtes Lösen oder eine unkorrekte Position des Eingriffselements 51 in der Koppeleinheit 37 detektierbar ist. Da die Art und Weise des Detektierens bzw. der Messung der Flussrate bzw. des Drucks oder der Druckdifferenz nicht Kern der vorliegenden Erfindung ist und einem Fachmann ohne weiteres geläufig ist, kann an dieser Stelle auf eine detailliertere Beschreibung verzichtet werden.

Wird das 3/2-Wegeventil 69 in die Stellung "EXTERN" geschaltet, so wird das "Mess"-Pneumatikmedium über die Auslassöffnungen 79a, 79b im unteren Grundkörperteil 63 vertikal fluchtend verlaufenden Bohrungen im oberen Grundkörperteil 61 zugeführt, die wiederum mit entsprechenden vertikalen Bohrungen in der Koppeleinheit 37 fluchten (wenn diese in der korrekten azimutalen Position eingesetzt ist), so dass das "Mess"-Pneumatikmedium weiteren Auslassöffnungen 109a, 109b in der Oberseite der Koppeleinheit 37 zugeführt wird. Auf diese Weise kann auch das "Mess"-Pneumatikmedium bei in der Stellung "EXTERN" befindlichem 3/2-Wegeventil 69 durch das Koppelmodul 5 durchgeschleift werden.

Die in Fig. 1 bis 6 dargestellten Module in Form der Schiene 3 und der Koppelmodule 5 können selbstverständlich auch in einer Vielzahl weiterer Varianten hergestellt werden.

Beispielsweise kann das Koppelmodul 5 anstelle seiner schwenkbaren Klemmfüße 7 an seiner Unterseite auch ein zapfenförmiges Eingriffselement aufweisen, welches so ausgebildet ist, dass es in einen Aufnahmebereich einer Koppeleinheit 37 aufgenommen werden kann, welches an einem weiteren Koppelmodul angeordnet ist.

Selbstverständlich kann der Grundkörper des in Fig. 1 dargestellten Koppelmoduls 5 auch einteilig ausgebildet sein, wenn auf die verschiebbare Funktion der beiden Grundkörperteile verzichtet werden kann.

Die Schiene 3 kann ebenfalls dahingehend variiert werden, dass an ihrer Unterseite Eingriffselemente vorgesehen sind, mit denen die Schiene in einem darunter befindlichen Koppelmodul gehalten werden kann, in dem beispielsweise wiederum ein oder mehrere Koppeleinheiten 37 angeordnet sind. Die Zuführung des Pneumatikmediums kann dann durch an der Unterseite der Schiene 3 ausgebildete Zuführöffnungen erfolgen, die mit den Auslassöffnungen 107a, 107b bzw. 109a, 109b an der Oberseite jeder Koppeleinheit 37 fluchten.

In gleicher Weise kann auf die in Fig. 1 dargestellte Möglichkeit des Vorsehens von Anschlüssen für das Zuführen von Pneumatikmedium über eine Stirnseite der Schiene (Zuführöffnungen 17, 19) verzichtet werden und stattdessen an einer oder an beiden Stirnseiten Eingriffselemente vorgesehen werden.

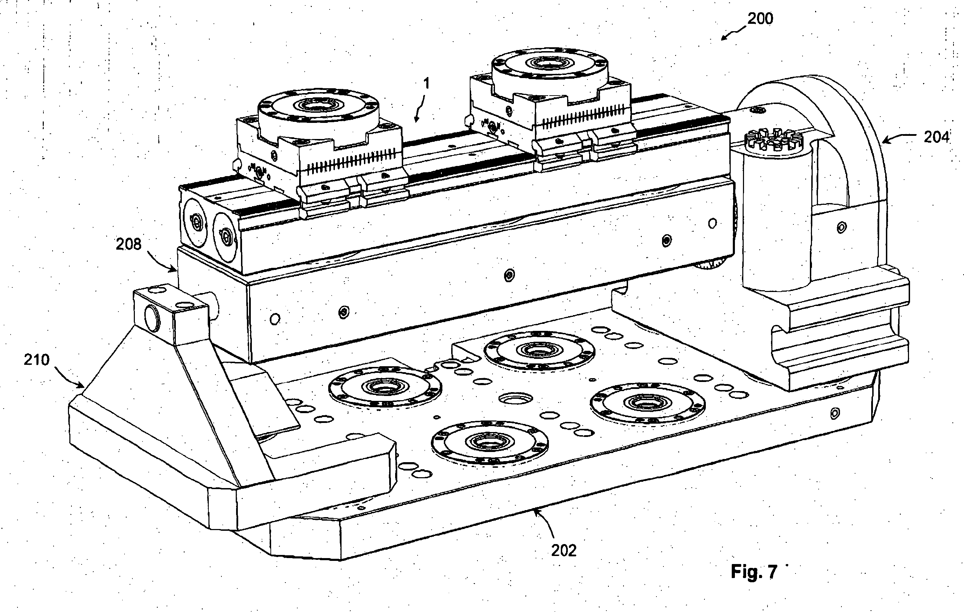

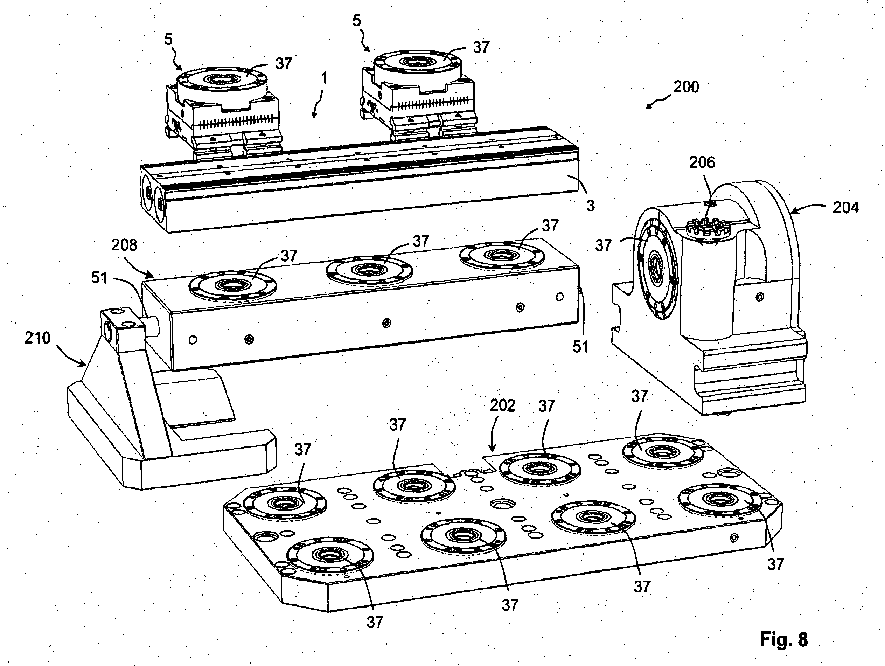

Die in den Fig. 7 und 8 dargestellte, komplexere Koppeleinheit 200 besteht aus einem als Grundplatte ausgebildeten Koppelmodul 202, wobei im plattenförmigen Grundkörper des Koppelmoduls 202 mehrere (im dargestellten Ausführungsbeispiel acht) Koppeleinheiten 37 aufgenommen sind. Die Zuführöffnung 47 jeder Koppeleinheit 37 ist mit einem Versorgungskanal für das Zuführen von Pneumatikmedium innerhalb des Grundkörpers des Koppelmoduls 202 verbunden. Jeder der Versorgungskanäle, der zu einer Koppeleinheit 37 führt, kann von einem Sammelversorgungskänal (nicht dargestellt) abzweigen, so dass dem plattenförmigen Koppelmodul 202 das Pneumatikmedium für das Betätigen der Koppeleinheiten 37 über eine einzige Zuführöffnung zuführbar ist. In jedem der vom Sammelversorgungskanal zu den Koppeleinheiten 37 führenden Versorgungskanal kann wiederum ein 3/2-Wegeventil angeordnet sein, welches so ausgebildet sein kann, wie vorstehend in Verbindung mit Fig. 1 bis 6 beschrieben. Für jede der Koppeleinheiten 37 steht dann ein Stellelement zur Verfügung, das Pneumatikmedium zur Betätigung der Arretierfunktion der Koppeleinheiten 37 entweder den Koppeleinheiten 37 zuzuführen (Stellung "INTERN") oder über jede der Koppeleinheiten 37 in der vorbeschriebenen Weise durchzuschleifen (Stellung "EXTERN").

Ist gewährleistet, dass ein Koppelmodul mit mehreren Koppeleinrichtungen, beispielsweise in Form der Koppeleinheiten 37, so betrieben wird, dass immer zwei oder mehrere Koppeleinrichtungen bzw. Koppeleinheiten gleichzeitig verwendet werden, so kann selbstverständlich auch anstelle zweier oder mehrerer, jeweils einer einzigen Koppeleinrichtung zugeordneter Wegeventile jeweils ein einziges Wegeventil verwendet werden, wobei die Struktur der Kanäle zur Führung des Pneumatikmediums so gewählt ist, dass entweder jeweils die zwei oder mehreren Koppeleinrichtungen gleichzeitig betrieben werden (Schaltstellung "INTERN" des einzigen Wegeventils) oder das Pneumätikmedium jeweils gleichzeitig über die zwei oder mehreren Koppeleinrichtungen durchgeschleift wird (Schaltstellung "EXTERN" des einzigen Wegeventils).

Bei der Koppeleinheit gemäß den Fig. 8 und 9 wird auf das plattenförmige Koppelmodul 202 ein weiteres spezielles Koppelmodul 204 aufgesetzt, an dessen Grundkörper zwei an der Unterseite vorgesehene Eingriffselemente 51 in die Aufnahmeöffnungen von zwei benachbarten Koppeleinheiten 37 im Koppelmodul 202 aufgenommen sind.

Zur Montage des Koppelmoduls 204 auf dem plattenförmigen Koppelmodul 202 werden zunächst die beiden den am rechten Randbereich angeordneten Koppeleinheiten 37 zugeordneten Wegeventile in die Stellung "INTERN" geschaltet. Anschließend wird dem Köppelmodul 202 Pneumatikmedium unter Druck zugeführt. Hierdurch werden die Koppeleinheiten 37 in die Freigabeposition überführt, so dass die an der Unterseite des Grundkörpers des Koppelmoduls 204 befindlichen Eingriffselemente 51 in die Aufnahmebereiche der Koppeleinheiten 37 eingesetzt werden können.

Selbstverständlich kann das plattenförmige Koppelmodul 202 ebenfalls für jede Koppeleinheit 37 separat oder, wie vorstehend beschrieben, für mehrere Koppeleinheiten jeweils ein Wegeventil aufweisen, mit dem jeder zugeordneten bzw. den jeweils zugeordneten mehreren Koppeleinheiten 37 "Mess"-Pneumatikmedium zugeführt werden kann. Die betreffenden Wegeventile können zunächst ebenfalls in der Stellung "INTERN" stehen, so dass hierdurch der korrekte Sitz des eingesetzten Koppelmoduls 204 überprüft werden kann. Anschließend können die Wegeventile für die beiden rechten Koppeleinheiten 37 in die Stellung "EXTERN" geschaltet werden, so dass das "Mess"-Pneumatikmedium durch die betreffenden Koppeleinheiten 37 durchgeschleift und dem Koppelmodul 204 zugeführt werden kann.

Das Koppelmodul 204 kann an seiner Unterseite in einem oder in beiden Schnittstellenbereichen, mit dem das Koppelmodul 204 im Bereich einer Koppeleinheit 37 auf der Oberfläche des Koppelmoduls 202 aufliegt, mit Zuführöffnungen für das "Mess"-Pneumatikmedium versehen sein.

Das Koppelmodul 204 ist so ausgebildet, dass an der einwärts gewandten Seitenfläche eine Koppeleinheit 37 um eine horizontale Achse, welche mit der Achse der Koppeleinheit 37 fluchtet, drehbar im Gehäuse der Koppeleinheit 204 gehalten ist. Die Rotation der Koppeleinheit 37 im Gehäuse des Koppelmoduls 204 ist dadurch bewirkbar, dass das Stellrad 206 manuell oder mittels einer nicht näher dargestellten Vorrichtung um eine vertikale Achse gedreht wird.

Das Koppelmodul 37 ist im Gehäuse des Koppelmoduls 204 so aufgenommen, dass es in der vorbeschriebenen Weise pneumatisch betätigbar ist. Hierzu müssen im Gehäuse selbstverständlich entsprechende Kanäle für das Pneumatikmedium vorgesehen sein, die in jeder Winkelstellung der Koppeleinheit 37 eine Betätigung der Arretierfunktion bzw. der Freigabefunktion ermöglichen, wenn dem Koppelmodul 204 über das Koppelmodul 202 Pneumatikmedium unter Druck zugeführt wird.

Das Koppelmodul 204 kann selbstverständlich ebenfalls ein Stellelement 71 für ein Wegeventil aufweisen, mit dem das Pneumatikmedium zur Betätigung der Koppeleinheit 37 durchgeschleift wird.

In gleicher Weise kann selbstverständlich auch das Koppelmodul 204 über eine Funktion zur Erfassung der korrekten Arretierung eines Eingriffselements in den Aufnahmebereich der Koppeleinheit 37 verfügen. Hierzu muss, wie vorstehend beschrieben ein entsprechender "Mess"-Kanal vorgesehen sein, der beispielsweise wieder mittig hinter dem Aufnahmebereich der Koppeleinheit 37 endet. Das "Mess"-Pneumatikmedium kann ebenfalls mit einem Wegeventil in der vorstehend beschriebenen Art und Weise durch die Koppeleinheit 37 durchgeschleift und dem jeweils folgenden Koppelmodul zur Verfügung gestellt werden. Die in Fig. 7 und 8 dargestellte Ausführungsform einer Koppeleinheit 200 umfasst des Weiteren ein balkenartig ausgeführtes Koppelmodul 208, in dem drei Koppeleinheiten 37 angeordnet sind. Der Grundkörper des Koppelmoduls 208 kann, wie die Schiene in Fig. 1, zwei längs verlaufende Kanäle für das Zuführen des Pneumatikmediums zum Betätigen der Koppeleiriheiten 37 bzw. zum Zuführen des "Mess"-Pneumatikmediums aufweisen. Von dem betreffenden Sammelversorgungskanal bzw. Sammeldetektorkanal können wiederum für jede Koppeleinheit 37 separate Versorgungskanäle bzw. Detektorkanäle abzweigen, in denen jeweils wiederum ein Wegeventil in der vorstehend beschriebenen Art und Weise angeordnet ist. In den Fig. 7 und 8 sind lediglich die auf einer Längsseite des Koppelmoduls 208 sichtbaren Stellelemente 71 für jeweils drei der sechs Wegeventile dargestellt.

An seiner rechten Stirnseite weist das Koppelmodul 208 ein zapfenförmiges Eingriffselement 51 auf, welches in den Aufnahmebereich der Koppeleinheit 37 des Koppelmoduls 204 eingreift. Selbstverständlich sind an dieser Stirnseite des Koppelmoduls 208 auch entsprechende Zuführöffnungen für das Zuführen des Pneumatikmediums zur Betätigung der Koppeleinheiten 37 bzw. für das Zuführen des "Mess"-Pneumatikmediums vorgesehen, welche mit jeweils zumindest einer der Auslassöffnungen 107a, 107b bzw. 109a, 109b, fluchten.

An der gegenüberliegenden Stirnseite weist das Koppelmodul 208 ein zapfenförmiges Eingriffselement 51 auf, welches die Rotierbarkeit des Koppelmoduls 208 in einem dieses rotierbar führenden Arbeitsmodul 210 sicherstellt.

Zur Montage kann beispielsweise das mit seinem linken Eingriffselement 51 bereits in die Führung des Arbeitsmoduls 210 eingesetzte Arbeitsmodul 208 erst mit seinem an der rechten Stirnseite vorgesehenen Eingriffselement 51 in die Koppeleinheit 37 des Koppelmodul 204 eingesetzt werden und anschließend das Arbeitsmodul 210 auf dem Koppelmodul 202 fixiert werden. Hierzu weist das Arbeitsmodul 210 an der Unterseite seiner beiden Arme jeweils ein Eingriffselement auf, welches jeweils in eine der beiden linken Koppeleinheiten 37 des Koppelmoduls 202 eingreifen.

Da das Arbeitsmodul 210 nicht pneumatisch betrieben wird, ist es nicht erforderlich, die Wegeventile der beiden linken im Koppelmodul 202 angeordneten Koppeleinheiten 37 jeweils auf die Stellung "EXTERN" umzuschalten.

Schließlich umfasst die Koppeleinheit 200 nach den Fig. 7 und 8 auch eine Einheit 1 gemäß den Fig. 1 bis 6, wobei die Schiene 3 an ihrer Unterseite jeweils zwei bzw. drei Eingriffselemente aufweisen kann, die jeweils in den Aufnahmebereich einer Koppeleinheit 37 des Koppelmoduls 208 eingreifen können. Die Koppeleinheiten 37 des Moduls 208 sind hinsichtlich der Arretierposition bzw. Freigabeposition betätigbar und auch hinsichtlich der korrekten Aufnahme der Eingriffselemente der Schiene 3 überprüfbar, da sowohl das "Versorgungs"-Pneumatikmedium als auch das "Mess"-Pneumatikmedium vom Modul 202 über das Modul 204 auf das Modul 208 durchgeschleift ist.

Bereits aufgrund dieser lediglich zwei in den Fig. 1 bis 8 dargestellten Varianten wird deutlich, dass mit einem modulartigen Spannsystem nach der Erfindung, das aus mehreren Typen unterschiedlich ausgebildeter Koppelmodule besteht eine Vielzahl von unterschiedlichen Varianten von Koppeleinheiten erzeugt werden kann. Dabei ist es selbstverständlich auch möglich, in einer Koppeleinheit mehrere gleichartige Koppelmodule zu verwenden. Es bietet sich an, als Basis jeweils ein plattenförmig ausgebildetes Koppelmoduls 202 zu verwenden, wobei auf diesem Koppelmodul 202 ein oder mehrere weitere Koppelmodule verschiedenen oder auch gleichartigen Typs montiert werden.

Durch das Durchschleifen von Pneumatikmedium bis zum letzten Koppelmodul ist es auch möglich, als letztes Modul ein Arbeitsmodul zu verwenden, das pneumatisch betätigbar ist. Beispielsweise kann es sich hierbei um ein Modul handeln, das pneumatisch betätigbare Klemmen aufweist. Die Klemmfunktion ist dabei vorzugsweise so ausgebildet, dass bei Druckbeaufschlagung ein Lösen und bei fehlender Druckbeaufschlagung ein Klemmen eines Elements, beispielsweise eines Werkstücks ermöglicht wird.

## Patentansprüche

1. Pneumatisches Koppelmodul, insbesondere für ein Nullpunktspannsystem,
(a) mit wenigstens einer pneumatisch betätigbaren Koppeleinrichtung (37), welcher das Pneumatikmedium über einen Versorgungskanal (87, 95, 97) zuführbar ist und welche derart ausgebildet ist, dass die Koppeleinrichtung (37) in ihrem druckbeaufschlagten Zustand eine Freigabeposition und in ihrem nichtdruckbeaufschlagten Zustand eine Arretierposition einnimmt,
(b) wobei das Koppelmodul (5; 202, 204; 208) einen Schnittstellenbereich zur Koppelung eines weiteren pneumatischen Koppelmoduls (5; 202, 204; 208) oder eines pneumatisch betätigten Arbeitsmoduls (210) aufweist,
**dadurch gekennzeichnet,**
(c) **dass** im Versorgungskanal (87, 101, 103) ein Wegeventil (89) vorgesehen ist, welches einen ersten Port aufweist, der mit einem das Pneumatikmedium zuführenden ersten Teil (87) des Versorgungskanals (87, 101, 103) verbunden ist, einen zweiten Port, der mit einem vom Wegeventil (89) zur Koppeleinrichtung (37) führenden zweiten Teil (101, 103) des Versorgungskanals (87, 101, 103) verbunden ist, und einen dritten Port, der mit einem Versorgungs-Koppelkanal (95, 97) verbunden ist, dessen wenigstens eine Auslassöffnung (99a, 107a; 99b, 107b) derart im Schnittstellenbereich angeordnet ist, dass diese mit einer Einlassöffnung des Versorgungskanals des weiteren pneumatischen Koppelmoduls (5; 202, 204; 208) oder des pneumatisch betätigten Arbeitsmoduls (210) im Wesentlichen dicht koppelbar ist,
(d) wobei das Wegeventil (89) in einer ersten Schaltstellung den ersten und zweiten Port verbindet, so dass der erste Teil (87) des Versorgungskanals (87, 101, 103) mit dem zweiten Teil (101, 103) des Versorgungskanals (87, 101, 103) verbunden ist und die Koppeleinrichtung (37) in ihre Freigabeposition gesteuert wird, und wobei das Wegeventil (89) in der ersten Schaltstellung den ersten Port vom dritten Port trennt, wodurch dem Versorgungs-Koppelkanal (95, 97) kein Pneumatikmedium zuführbar ist, und
(e) wobei das Wegeventil (89) in einer zweiten Schaltstellung ("EXTERN") den zweiten Port vom ersten Port trennt und den ersten und dritten Port verbindet, so dass der erste Teil (87) des Versorgungskanals (87, 101, 103) mit dem Versorgungs-Koppelkanal (95, 97) verbunden ist und dem Versorgungs-Koppelkanal (95, 97) Pneumatikmedium zuführbar ist und dass der Koppeleinrichtung (37) über den zweiten Teil (101, 103) des Versorgungskanals (87, 101, 103) kein Pneumatikmedium zuführbar ist und diese in ihre Arretierposition gesteuert wird.

2. Pneumatisches Koppelmodul nach Anspruch 1, **dadurch gekennzeichnet,**
(a) **dass** für jede oder ausgewählte Koppeleinrichtungen (37) jeweils ein Detektorkanal (67, 81, 83) vorgesehen ist, welchem Pneumatikmedium zuführbar ist, wobei jeder Detektorkanal (67, 81, 83) derart ausgebildet ist, dass sein Querschnitt bei Vorhandensein eines Eingriffselements (51) in der Arretierposition der zugeordneten Koppeleinrichtung (37) reduziert oder ganz verschlossen wird, so dass durch eine Druck-, Druckdifferenz- oder Durchflussmessung das Vorhandensein eines Eingriffselements (51) oder der korrekte Sitz des Eingriffelements (51) in der Arretierposition detektierbar ist,
(b) **dass** im Versorgungskanal (67, 81, 83) jeweils ein Wegeventil (69) vorgesehen ist, welches einen ersten Port aufweist, der mit einem das Pneumatikmedium zuführenden ersten Teil (67) des Detektorkanals (67, 81, 83) verbunden ist, einen zweiten Port, der mit einem vom Wegeventil (69) zur Koppeleinrichtung (37) führenden zweiten Teil (81, 83) des Detektorkanals (67, 81, 83) verbunden ist, und einen dritten Port, der mit einem Detektor-Koppelkanal (75, 77) verbunden ist, dessen wenigstens eine Auslassöffnung (79a, 109a; 79b, 109b) derart im Schnittstellenbereich angeordnet ist, dass diese mit wenigstens einer Einlassöffnung eines Detektorkanals oder eines Sammeldetektorkanals eines weiteren pneumatischen Koppelmoduls (5; 202, 204; 208) oder eines pneumatisch betätigten Arbeitsmoduls (210) im Wesentlichen dicht koppelbar ist,
(c) wobei jedes Wegeventil (69) in einer ersten Schaltstellung ("INTERN") den ersten mit dem zweiten Port verbindet, so dass der erste Teil (67) des Detektorkanals (67, 81, 83) mit dem zweiten Teil (81, 83) des Detektorkanals (67, 81, 83) verbunden ist, und den ersten Port vom dritten Port trennt, wodurch dem Detektor-Koppelkanal (75, 77) kein Pneumatikmedium zuführbar ist, und
(d) wobei das Wegeventil (69) in einer zweiten Schaltstellung ("EXTERN") den zweiten Port vom ersten Port trennt und den ersten und dritten Port verbindet, so dass der erste Teil des Detektorkanals (67, 81, 83) mit dem Detektor-Koppelkanal (75, 77) verbunden ist und dem Detektor-Koppelkanal (75, 77) Pneumatikmedium zuführbar ist.

3. Pneumatisches Koppelmodul nach Anspruch 1 oder 2, **dadurch gekennzeichnet, dass** die wenigstens eine Koppeleinrichtung mindestens eine separate Koppeleinheit (37) aufweist, welche in einem Grundkörper (59) des Koppelmoduls (5; 202, 204; 208) im Schnittstellenbereich aufgenommen ist, und dass das wenigstens eine Wegeventil (89, 69) im Grundkörper (59) vorgesehen ist.

4. Pneumatisches Koppelmodul nach Anspruch 3, **dadurch gekennzeichnet, dass** jede Koppeleinheit (37) wenigstens einen Kanal aufweist, der einen Teil des betreffenden Versorgungs-Koppelkanals bildet (95, 97), wobei die wenigstens eine Auslassöffnung (107a, 107b) des betreffenden Versorgungs-Koppelkanals (95, 97) vorzugsweise an der Koppeleinheit (37) vorgesehen ist.

5. Pneumatisches Koppelmodul nach Anspruch 3 oder 4, **dadurch gekennzeichnet, dass** jede Koppeleinheit (37) wenigstens einen Kanal aufweist, der einen Teil des betreffenden Detektor-Koppelkanals (75, 77) bildet, wobei die wenigstens eine Auslassöffnung (109a, 109b) des betreffenden Detektor-Koppelkanals (75, 77) vorzugsweise an der Koppeleinheit (37) vorgesehen ist.

6. Pneumatisches Koppelmodul nach einem der vorhergehenden Ansprüche, **dadurch gekennzeichnet, dass** wenigstens zwei Koppeleinrichtungen (37) vorgesehen sind und dass die wenigstens zwei ersten Teile der Versorgungskanäle von einem einzigen Versorgungs-Sammelversorgungskanal abzweigen, dem Pneumatikmedium über eine Zuführöffnung zuführbar ist.

7. Pneumatisches Koppelmodul nach einem der Ansprüche 2 bis 6, **dadurch gekennzeichnet, dass** wenigstens zwei Koppeleinrichtungen (37) vorgesehen sind und dass die wenigstens zwei ersten Teile der Detektorkanäle von einem einzigen Sammeldetektorkanal abzweigen, dem Pneumatikmedium über eine Zuführöffnung zuführbar ist.

8. Pneumatisches Koppelmodul nach einem der vorhergehenden Ansprüche, **dadurch gekennzeichnet, dass** das Koppelmodul (5; 202, 204; 208) einen weiteren Schnittstellenbereich aufweist, mit welchem das Köppelmodul (5; 202, 204; 208) seinerseits mit einem ersten Schnittstellenbereich eines weiteren Koppelmoduls (5; 202, 204; 208) koppelbar ist, wobei in dem weiteren Schnittstellenbereich wenigstens ein Eingriffselement (51) zum Eingriff in die Koppeleinrichtung (37) des weiteren Koppelmoduls (5; 202, 204; 208) vorgesehen ist und wobei in dem weiteren Schnittstellenbereich wenigstens eine Zuführöffnung des Versorgungskanals oder Sammelversorgungskanals und gegebenenfalls auch wenigstens eine Zuführöffnung des Detektorkanals oder Sammeldetektorkanals derart angeordnet ist, dass diese mit der wenigstens einen Auslassöffnung (107a, 107b; 109a, 109b) des Versorgungs-Koppelkanals bzw. des Detektor-Koppelkanals des weiteren Koppelmoduls (5; 202, 204; 208) im Wesentlichen dicht verbindbar ist.

9. Pneumatisches Koppelmodul nach Anspruch 8, **dadurch gekennzeichnet, dass** das Koppelmodul (5) einen zweiteilig ausgebildeten Grundkörper (59) aufweist, wobei ein erster Teil (61) des Grundkörpers (59) die wenigstens eine Koppeleinrichtung aufweist und ein zweiter Teil (63) des Grundkörpers (59) das wenigstens eine Eingriffselement (51) aufweist, und dass die beiden Teile (61, 63) des Grundkörpers (59) in wenigstens einem Freiheitsgrad relativ zueinander beweglich geführt sind, vorzugsweise um eine einzige rotatorische Achse oder in einer einzigen translatorischen Richtung.

10. Pneumatisches Koppelmodul nach Anspruch 9, **dadurch gekennzeichnet, dass** das wenigstens eine Wegeventil (89) im Versorgungskanal (87, 101, 103) und ggf. das wenigstens eine Wegeventil (69) im Detektorkanal (67, 81, 83) im zweiten Teil (63) des Grundkörpers (59) vorgesehen ist.

11. Pneumatisches Koppelmodul nach einem der vorherigen Ansprüche, **dadurch gekennzeichnet, dass** für jedes Wegeventil (69, 89) oder für jede Gruppe von Wegeventilen (69, 89) eine manuell betätigbare Stelleinrichtung (71) vorgesehen ist.

12. Modulartiges Spannsystem, insbesondere für eine Werkzeugmaschine, bestehend aus mehreren Typen unterschiedlich ausgebildeter Koppelmodule (5; 202, 204; 208) nach einem der vorhergehenden Ansprüche, wobei die Typen von Koppelmodulen (5; 202, 204; 208) hinsichtlich der Eingriffselemente (51) und hinsichtlich der Zuführöffnungen für die Versorgungskanäle oder Sammelversorgungskanäle sowie gegebenenfalls die Zuführöffnungen für die Detektorkanäle oder Sammeldetektorkanäle und hinsichtlich der Auslassöffnungen der Versorgungs-Koppelkanäle sowie gegebenenfalls die Auslassöffnungen der Detektor-Koppelkanäle derart ausgebildet sind, dass gleichartig und unterschiedlich ausgebildete Koppelmodule (5; 202, 204; 208) zumindest in vorbestimmten Kombinationen koppelbar sind.

13. Modulartiges Spannsystem nach Anspruch 12, **dadurch gekennzeichnet, dass** wenigstens ein Typ eines zumindest ein Eingriffselement (51) aufweisenden Arbeitsmoduls (210) vorgesehen ist.

14. Modulartiges Spannsystem nach Anspruch 13, **dadurch gekennzeichnet, dass** das Arbeitsmodul (210) als manuell oder pneumatisch betätigbares Spann- oder Klemmmodul ausgebildet ist, das Spann-oder Klemmmittel zur Fixierung eines Werkstücks aufweist.

## Claims

1. A pneumatic coupling module, in particular for a zero-point clamping system,
(a) having at least one pneumatically operable coupling device (37), to which the pneumatic medium can be fed by way of a supply channel (87, 95, 97) and which is formed in such a manner that the coupling device (37) occupies a release position in its pressurized state and a locked position in its non-pressurized state,
(b) wherein the coupling module (5; 202, 204; 208) has an interface region for coupling an additional pneumatic coupling module (5; 202, 204; 208) or a pneumatically operated working module (210), **characterised in that**
(c) provided in the supply channel (87, 101, 103) there is a directional valve (89) which has a first port that is connected to a first part (87) of the supply channel (87, 101, 103) feeding the pneumatic medium, a second port that is connected to a second part (101, 103) of the supply channel (87, 101, 103) leading from the directional valve (89) to the coupling device (37), and a third port that is connected to a supply coupling channel (95, 97), the at least one outlet opening (99a, 107a; 99b, 107b) of which is arranged in the interface region in such a way that the outlet opening (99a, 107a; 99b, 107b) can be coupled in a substantially sealed manner to an inlet opening of the supply channel of the additional pneumatic coupling module (5; 202, 204; 208) or the pneumatically operated working module (210),
(d) wherein the directional valve (89) connects the first and second port in a first switching position so that the first part (87) of the supply channel (87, 101, 103) is connected to the second part (101, 103) of the supply channel (87, 101, 103), and the coupling device (37) is controlled to assume its release position, and wherein the directional valve (89) disconnects the first port from the third port in the first switching position, as a result of which no pneumatic medium can be fed to the supply coupling channel (95, 97), and
(e) wherein the directional valve (89) disconnects the second port from the first port in a second switching position ("EXTERNAL") and connects the first and third port so that the first part (87) of the supply channel (87, 101, 103) is connected to the supply coupling channel (95, 97) and pneumatic medium can be fed to the supply coupling channel (95, 97) and that no pneumatic medium can be fed by way of the second part (101, 103) of the supply channel (87, 101, 103) to the coupling device (37) and the coupling device (37) is controlled to assume its locked position.

2. A pneumatic coupling module according to claim 1,
**characterised in that**
(a) a respective detector channel (67, 81, 83), to which pneumatic medium can be fed, is provided for each or selected coupling devices (37), each detector channel (67, 81, 83) being formed in such a way that its cross section is reduced or completely closed in the presence of an engagement element (51) in the locked position of the associated coupling device (37) so that the presence of an engagement element (51) or the correct location of the engagement element (51) in the locked position can be detected by a measurement of pressure, pressure difference or flow rate,
(b) **in that** provided in the supply channel (67, 81, 83) there is a respective directional valve (69) which has a first port that is connected to a first part (67) of the detector channel (67, 81, 83) feeding the pneumatic medium, a second port that is connected to a second part (81, 83) of the detector channel (67, 81, 83) leading from the directional valve (69) to the coupling device (37), and a third port that is connected to a detector coupling channel (75, 77), the at least one outlet opening (79a, 109a; 79b, 109b) of which is arranged in the interface region in such a way that the outlet opening (79a, 109a; 79b, 109b) can be coupled in a substantially sealed manner to at least one inlet opening of a detector channel or a manifold detector channel of an additional pneumatic coupling module (5; 202, 204; 208) or a pneumatically operated working module (210),
(c) wherein each directional valve (69) connects the first to the second port in a first switching position ("INTERVAL"), so that the first part (67) of the detector channel (67, 81, 83) is connected to the second part (81, 83) of the detector channel (67, 81, 83), and disconnects the first port from the third port, as a result of which no pneumatic medium can be fed to the detector coupling channel (75,77), and
(d) wherein the directional valve (69) disconnects the second port from the first port in a second switching position ("ETERNAL") and connects the first and third port so that the first part of the detector channel (67, 81, 83) is connected to the detector coupling channel (75, 77) and pneumatic medium can be fed to the detector coupling channel (75, 77).

3. A pneumatic coupling module according to claim 1 or 2, **characterised in that** the at least one coupling device has at least one separate coupling unit (37) which is accommodated in a main body (59) of the coupling module (5; 202, 204; 208) in the interface region, and **in that** the at least one directional valve (89, 69) is provided in the main body (59).

4. A pneumatic coupling module according to claim 3, **characterised in that** each coupling unit (37) has at least one channel that forms a part of the relevant supply coupling channel (95, 97), the at least one outlet opening (107a, 107b) of the relevant supply coupling channel (95, 97) preferably being provided on the coupling unit (37).

5. A pneumatic coupling module according to claim 3 or 4, **characterised in that** each coupling unit (37) has at least one channel that forms a part of the relevant detector coupling channel (75, 77), the at least one outlet opening (109a, 109b) of the relevant detector coupling channel (75, 77) preferably being provided on the coupling unit (37).

6. A pneumatic coupling module according to one of the preceding claims, **characterised in that** at least two coupling devices (37) are provided, and **in that** the at least two first parts of the supply channels branch off from a single supply manifold supply channel to which pneumatic medium can be fed by way of a feed opening.

7. A pneumatic coupling module according to one of claims 2 to 6, **characterised in that** at least two coupling devices (37) are provided, and **in that** the at least two first parts of the detector channels branch off from a single manifold detector channel to which pneumatic medium can be fed by way of a feed opening.

8. A pneumatic coupling module according to one of the preceding claims, **characterised in that** the coupling module (5; 202, 204; 208) has an additional interface region, .with which the coupling module (5; 202, 204; 208) can in turn be coupled to a first interface region of an additional coupling module (5; 202, 204; 208), wherein at least one engagement element (51) for engaging in the coupling device (37) of the additional coupling module (5; 202, 204; 208) is provided in the additional interface region, and wherein at least one feed opening of the supply channel or manifold supply channel and, if applicable, also at least one feed opening of the detector channel or manifold detector channel is arranged in the additional interface region in such a way that the opening can be connected in a substantially sealed manner to the at least one outlet opening (107a, 107b; 109a, 109b) of the supply coupling channel or of the detector coupling channel of the additional coupling module (5; 202, 204; 208).

9. A pneumatic coupling module according to claim 8, **characterised in that** the coupling module (5) has a main body (59) formed in two parts, wherein a first part (61) of the main body (59) has the at least one coupling device, and a second part (63) of the main body (59) has the at least one engagement element (51), and **in that** the two parts (61, 63) of the main body (59) are guided movably relative to one another with at least one degree of freedom, preferably about a single rotational axis or in a single translatory direction.

10. A pneumatic coupling module according to claim 9, **characterised in that** the at least one directional valve (89) is provided in the supply channel (87, 101, 103) and, if applicable, the at least one directional valve (69) is provided in the detector channel (67, 81, 83) in the second part (63) of the main body (59).

11. A pneumatic coupling module according to one of the previous claims, **characterised in that** a manually operable actuation device (71) is provided for each directional valve (69, 89) or for each group of directional valves (69, 89).

12. A modular clamping system, in particular for a machine tool, consisting of several types of differently formed coupling modules (5; 202, 204; 208) according to one of the preceding claims, wherein the types of coupling modules (5; 202, 204; 208) are formed in such a way with respect to the engagement elements (51) and with respect to the feed openings for the supply channels or manifold supply channels and also, if applicable, the feed openings for the detector channels or manifold detector channels and with respect to the outlet openings of the supply coupling channels and also, if applicable, the outlet openings of the detector coupling channels that similarly and differently formed coupling modules (5; 202, 204; 208) can be coupled at least in predetermined combinations.

13. A modular clamping system according to claim 12, **characterised in that** at least one type of working module (210) having at least one engagement element (51) is provided.

14. A modular clamping system according to claim 13, **characterised in that** the working module (210) is formed as a manually or pneumatically operable clamping or gripping module that has clamping or gripping means for fixing a workpiece.

## Revendications

1. Module de couplage pneumatique, en particulier pour un système de serrage point zéro,
(a) comprenant au moins un dispositif de couplage (37) à actionnement pneumatique, auquel le fluide pneumatique peut être amené par le biais d'une conduite d'alimentation (87, 95, 97) et qui est conçu de telle sorte que le dispositif de couplage (37) adopte une position de déverrouillage dans son état mis en pression et une position de verrouillage dans son état non mis en pression,
(b) étant entendu que le module de couplage (5 ; 202, 204 ; 208) présente une zone d'interface permettant le couplage d'un module de couplage pneumatique supplémentaire (5 ; 202, 204 ; 208) ou d'un module de travail (210) à actionnement pneumatique,
caractérisé :
(c) en ce qu'il est prévu dans la conduite d'alimentation (87, 101, 103) un distributeur (89) qui présente un premier port qui est relié à une première partie (87) de la conduite d'alimentation (87, 101, 103) transportant le fluide pneumatique, un deuxième port qui est relié à une deuxième partie (101, 103) de la conduite d'alimentation (87, 101, 103) allant du distributeur (89) jusqu'au dispositif de couplage (37), et un troisième port qui est relié à une conduite de couplage d'alimentation (95, 97) dont au moins une ouverture de sortie (99a, 107a ; 99b, 107b) est agencée dans la zone d'interface de telle sorte qu'elle peut être couplée de façon sensiblement étanche avec une ouverture d'admission de la conduite d'alimentation du module de couplage pneumatique supplémentaire (5 ; 202, 204 ; 208) ou du module de travail (210) à actionnement pneumatique,
(d) étant entendu que le distributeur (89), dans une première position de commutation, relie les premier et deuxième ports de telle sorte que la première partie (87) de la conduite d'alimentation (87, 101, 103) est reliée à la deuxième partie (101, 103) de la conduite d'alimentation (87, 101, 103) et que le dispositif de couplage (37) est guidé dans sa position de déverrouillage, et étant entendu que le distributeur (89), dans la première position de commutation, sépare le premier port du troisième port de sorte que le fluide pneumatique ne peut être amenée à la conduite de couplage d'alimentation (95, 97), et
(e) étant entendu que le distributeur (89), dans une deuxième position de commutation (« EXTÉRIEUR »), sépare le deuxième port du premier port et relie les premier et troisième ports de telle sorte que la première partie (87) de la conduite d'alimentation (87, 101, 103) est reliée à la conduite de couplage d'alimentation (95, 97) et que le fluide pneumatique peut être amené à la conduite de couplage d'alimentation (95, 97), et étant entendu que le fluide pneumatique ne peut être amené au dispositif de couplage (37) par le biais de la deuxième partie (101, 103) de la conduite d'alimentation (87, 101, 103) et que le dispositif de couplage (37) est guidé dans sa position de verrouillage.

2. Module de couplage pneumatique selon la revendication 1, **caractérisé :**
(a) **en ce qu'**il est prévu pour chacun ou pour une sélection des dispositifs de couplage (37) une conduite de détection (67, 81, 83) à laquelle le fluide pneumatique peut être amené, étant entendu que chaque conduite de détection (67, 81, 83) est conçue de telle sorte que sa section est réduite ou entièrement fermée en cas de présence d'un élément d'engagement (51) dans la position de verrouillage du dispositif de couplage (37) associé, de telle sorte que la présence d'un élément d'engagement (51) ou la mise en place correcte de l'élément d'engagement (51) dans la position de verrouillage peut être détectée au moyen d'une mesure de la pression, de l'écart de pression ou du débit,
(b) **en ce qu'**il est prévu dans la conduite d'alimentation (67, 81, 83) un distributeur (69) qui présente un premier port qui est relié à une première partie (67) de la conduite de détection (67, 81, 83) transportant le fluide pneumatique, un deuxième port qui est relié à une deuxième partie (81, 83) de la conduite de détection (67, 81, 83) allant du distributeur (69) jusqu'au dispositif de couplage (37), et un troisième port qui est relié avec une conduite de couplage de détection (75, 77), dont au moins une ouverture de sortie (79a, 109a ; 79b, 109b) est agencée dans la zone d'interface de telle sorte qu'elle peut être couplée de façon sensiblement étanche avec au moins une ouverture d'admission d'une conduite de détection ou d'une conduite de détection commune d'un module de couplage pneumatique supplémentaire (5 ; 202, 204 ; 208) ou d'un module de travail (210) à actionnement pneumatique,
(c) étant entendu que chaque distributeur (69), dans une première position de commutation (« INTÉRIEUR »), relie le premier port au deuxième port de telle sorte que la première partie (67) de la conduite de détection (67, 81, 83) est reliée à la deuxième partie (81, 83) de la conduite de détection (67, 81, 83) et sépare le premier port du troisième port de sorte que le fluide pneumatique ne peut être amenée à la conduite de couplage de détection (75, 77), et
(d) étant entendu que le distributeur (69), dans une deuxième position de commutation (« EXTÉRIEUR »), sépare le deuxième port du premier port et relie le premier port au troisième port de telle sorte que la première partie de la conduite de détection (67, 81, 83) est reliée à la conduite de couplage de détection (75, 77) et que le fluide pneumatique peut être amené à la conduite de couplage de détection (75, 77).

3. Module de couplage pneumatique selon la revendication 1 ou 2, **caractérisé en ce que** l'au moins un dispositif de couplage présente au moins une unité de couplage (37) séparée, qui est logée dans un corps de base (59) du module de couplage (5 ; 202, 204 ; 208) dans la zone d'interface, et **en ce que** l'au moins un distributeur (89, 69) est prévu dans le corps de base (59).

4. Module de couplage pneumatique selon la revendication 3, **caractérisé en ce que** chaque unité de couplage (37) présente au moins une conduite qui forme une partie de la conduite de couplage d'alimentation (95, 97) correspondante, étant entendu que l'au moins une ouverture de sortie (107a, 107b) de la conduite de couplage d'alimentation (95, 97) correspondante est de préférence prévue sur l'unité de couplage (37).

5. Module de couplage pneumatique selon la revendication 3 ou 4, **caractérisé en ce que** chaque unité de couplage (37) présente au moins une conduite qui forme une partie de la conduite de couplage de détection (75, 77) correspondante, étant entendu que l'au moins une ouverture de sortie (109a, 109b) de la conduite de couplage de détection (75, 77) correspondante est de préférence prévue sur l'unité de couplage (37).

6. Module de couplage pneumatique selon l'une des revendications précédentes, **caractérisé en ce qu'**au moins deux dispositifs de couplage (37) sont prévus et **en ce que** les au moins deux premières parties des conduites d'alimentation bifurquent à partir d'une seule conduite d'alimentation commune à laquelle le fluide pneumatique peut être amené par le biais d'une ouverture d'amenée.

7. Module de couplage pneumatique selon l'une des revendications 2 à 6, **caractérisé en ce qu'**au moins deux dispositifs de couplage (37) sont prévus et **en ce que** les au moins deux premières parties des conduites de détection bifurquent à partir d'une seule conduite de détection commune à laquelle le fluide pneumatique peut être amenée par le biais d'une ouverture d'amenée.

8. Module de couplage pneumatique selon l'une des revendications précédentes, **caractérisé en ce que** le module de couplage (5 ; 202, 204 ; 208) présente une zone d'interface supplémentaire avec laquelle le module de couplage (5 ; 202, 204 ; 208) peut être couplé pour sa part avec une première zone d'interface d'un module de couplage supplémentaire (5 ; 202, 204 ; 208), étant entendu qu'il est prévu dans la zone d'interface supplémentaire au moins un élément d'engagement (51) destiné à s'engager dans le dispositif de couplage (37) du module de couplage supplémentaire (5 ; 202, 204 ; 208) et étant entendu qu'au moins une ouverture d'amenée de la conduite d'alimentation ou de la conduite d'alimentation commune, et le cas échéant, également au moins une ouverture d'amenée de la conduite de détection ou de la conduite de détection commune sont agencées dans la zone d'interface supplémentaire de telle sorte qu'elles peuvent être couplées de façon sensiblement étanche respectivement avec l'au moins une ouverture de sortie (107a, 107b ; 109a, 109b) de la conduite de couplage d'alimentation et de la conduite de couplage de détection du module de couplage supplémentaire (5 ; 202, 204 ; 208).

9. Module de couplage pneumatique selon la revendication 8, **caractérisé en ce que** le module de couplage (5) présente un corps de base (59) réalisé en deux parties, étant entendu qu'une première partie (61) du corps de base (59) présente l'au moins un dispositif de couplage et qu'une deuxième partie (63) du corps de base (59) présente l'au moins un élément d'engagement (51), et **en ce que** les deux parties (61, 63) du corps de base (59) sont guidées de façon mobile l'une par rapport à l'autre à au moins un degré de liberté, de préférence autour d'un seul axe de rotation ou dans une seule direction de translation.

10. Module de couplage pneumatique selon la revendication 9, **caractérisé en ce que** l'au moins un distributeur (89) dans la conduite d'alimentation (87, 101, 103), et le cas échéant, l'au moins un distributeur (69) dans la conduite de détection (67, 81, 83) sont prévus dans la deuxième partie (63) du corps de base (59).

11. Module de couplage pneumatique selon l'une des revendications précédentes, **caractérisé en ce qu'**un dispositif de réglage à actionnement manuel (71) est prévu pour chaque distributeur (69, 89) ou pour chaque groupe de distributeurs (69, 89).

12. Système de serrage modulaire, en particulier pour une machine-outil, constitué de plusieurs types de modules de couplage (5 ; 202, 204 ; 208) selon l'une des revendications précédentes réalisés différemment, étant entendu que les types de modules de couplage (5 ; 202, 204 ; 208) sont conçus de telle sorte, au niveau des éléments d'engagement (51) et au niveau des ouvertures d'amenée pour les conduites d'alimentation ou les conduites d'alimentation communes, ainsi que, le cas échéant, les ouvertures d'amenée pour les conduites de détection ou les conduites de détection communes et au niveau des ouvertures de sortie des conduites de couplage d'alimentation ainsi que, le cas échéant, les ouvertures de sortie des conduites de couplage de détection, que des modules de couplage (5 ; 202, 204 ; 208) réalisés de façon similaire ou différente peuvent être couplés au moins dans des combinaisons prédéterminées.

13. Système de serrage modulaire selon la revendication 12, **caractérisé en ce qu'**il est prévu au moins un type d'un module de travail (210) présentant au moins un élément d'engagement (51).

14. Système de serrage modulaire selon la revendication 13, **caractérisé en ce que** le module de travail (210) est réalisé en tant que module de serrage en tension ou par enserrement, à actionnement manuel ou pneumatique, qui présente des moyens de serrage en tension ou par enserrement pour la fixation d'une pièce à usiner.
